# EUROPEAN PATENT SPECIFICATION

(11) **EP 4 698 488 B1**
(45) Date of publication and mention of the grant of the patent: **28.10.2026**
(21) Application number: 24746257.5
(22) Date of filing: 18.07.2024
(51) Int. Cl.: C01B 3/32, C10J 3/00, C10J 3/72

(54) **SYSTEM AND METHOD FOR PRODUCING A CHEMICAL PRODUCT HAVING A BIOGENIC CARBON CONTENT FROM TWO OR MORE FEEDSTOCKS**
SYSTEM UND VERFAHREN ZUR HERSTELLUNG EINES CHEMISCHEN PRODUKTS MIT EINEM BIOGENEN KOHLENSTOFFGEHALT AUS ZWEI ODER MEHR ROHSTOFFEN
SYSTÈME ET PROCÉDÉ DE PRODUCTION D'UN PRODUIT CHIMIQUE AYANT UNE TENEUR EN CARBONE BIOGÈNE À PARTIR DE DEUX CHARGES D'ALIMENTATION OU PLUS

(30) Priority: 31.07.2023 EP 23188692
(43) Date of publication of application: 25.02.2026
(73) Proprietor: BASF SE, 67056 Ludwigshafen am Rhein (DE)
(72) Inventor: HORST, Thomas, 67056 Ludwigshafen am Rhein (DE); STROBEL, Paul-Vinzent, 67056 Ludwigshafen am Rhein (DE); KOCH, Oliver, 67056 Ludwigshafen am Rhein (DE); BADER, Andre, 67056 Ludwigshafen am Rhein (DE); HARNISCHMACHER, Gerrit, 67056 Ludwigshafen am Rhein (DE); VON HARBOU, Inga, 67056 Ludwigshafen am Rhein (DE); AL SHAAL, Mohammad Ghith, 67056 Ludwigshafen am Rhein (DE)
(74) Representative: BASF IP Association
(86) International application number: PCT/EP2024/070343
(87) International publication number: WO 2025/026746

(56) References cited:
- WO-A1-2017/011025
- WO-A1-2022/084436
- WO-A1-2022/172181

## Description

### Technical Area

The present invention relates to a system and a method for producing syngas or at least one chemical product from syngas having a target biogenic carbon content.

### Background of the Invention

The production of chemical products having a biogenic carbon content from hydrocarbon feedstocks comprising biogenic carbon is becoming increasingly important for a sustainable and green chemical industry. In case a chemical product is produced from a single hydrocarbon feedstock said chemical product has the same biogenic carbon content as said hydrocarbon feedstock. Hence, a single hydrocarbon feedstock comprising biogenic carbon leads to a chemical product having about the same biogenic carbon content as said feedstock. On the other hand, a chemical product produced from a single hydrocarbon feedstock having a fossil origin, the biogenic carbon content in the chemical product is essentially zero.

Suitable hydrocarbon feedstocks comprising biogenic carbon may have an undefined biogenic carbon content based on their total mass e.g., when contaminated with substances of fossil origin such as mineral oils and plastic waste and/or having varying levels of moisture. Another source for a fluctuating biogenic carbon content in a hydrocarbon feedstock is a seasonal variation in composition of a given hydrocarbon feedstock. Examples for a seasonal variation in composition include the plastic content, amount of food residues, amount of gardening and/or other biomass in municipal solid waste.

Another source for an undefined biogenic carbon content of a feedstock derives from mixed feedstocks. Mixing of a hydrocarbon feedstock comprising biogenic carbon with one or more other hydrocarbon feedstocks which are fossil based or mixtures of components comprising biogenic carbon, and which are free of biogenic carbon is an example for this scenario. Such feedstock mixing is required when the amounts of hydrocarbon feedstocks comprising biogenic carbon is unstable because of e.g., seasonal effects or availability in sufficient quantity for a target product volume of a chemical product.

A continuous production of chemical products having a target biogenic carbon content is desired which requires a continuous supply and feeding of feedstock(s) from which the chemical product is made into the process and production units. Hence, the continuous production of a chemical product having a target biogenic carbon content from a feedstock having an undefined biogenic carbon content is a challenge, especially in the continuous production of base chemicals such as methanol and downstream products, methane, and Fischer-Tropsch hydrocarbons and downstream products in large quantities.

The determination of the biogenic carbon content in solid or mainly solid hydrocarbon feedstocks is usually not feasible, because such feedstocks often have an inhomogeneous spatial distribution of biogenic carbon which leads to high errors even when taking several random samples from such a feedstock. Examples of such hydrocarbon feedstocks comprise biomass, biomass residues, mixed plastic waste, municipal solid waste, liquid waste (for example from chemical processes), and refuse derived fuel (RDF).

A biomass co-combustion ratio monitoring system and method based on ¹⁴C isotope online detection is disclosed in CN 10805163 A. Flue gas is extracted from the flue of an incineration boiler. The system and method are applicable in the field of energy conversion from mixed feedstocks.

A radiocarbon (¹⁴C) monitoring device for liquid and gaseous substances is disclosed in KR 10-2022-0058093 A. The device is small in volume, easy to move and suitable for accurate and quick radiocarbon measurements performed on the samples taken in situ.

A method for the manufacture and use of a green product is disclosed in EP 2 695 909 A1. The method comprises the steps a) producing or buying the green product and b) controlling or having controlled technically the green character of said product by a ¹⁴C measurement of said product. Hence, the biogenic carbon content is measured in the final chemical product for certifying the green character of said chemical product.

A method for monitoring the amount of C14 present in co-feeds or blends of intermediate petroleum products and biogenic feedstocks, and corresponding blend streams in refinery coprocessing operations is disclosed in WO 2022/172181 A1. Controlling the biogenic carbon content in at least one chemical product made from syngas which is obtained from a feedstock having a fluctuating biogenic carbon content is not disclosed in this document.

WO 2022/084436 A1 relates to a process for the manufacture of a useful product such as a higher molecular weight (typically liquid) hydrocarbon product, for example synthetic fuels, from synthesis gas having a desired hydrogen to carbon monoxide molar ratio comprising: gasifying a first carbonaceous feedstock comprising waste materials and/or biomass in a gasification zone to produce a first synthesis gas; optionally partially oxidizing the first synthesis gas in a partial oxidation zone to generate oxidized synthesis gas; reforming a second carbonaceous feedstock, preferably renewable natural gas, to produce a second synthesis gas, the second synthesis gas having a different hydrogen to carbon ratio from that of the first raw synthesis gas; combining at least a portion of the first synthesis gas and at least a portion of the second synthesis gas in an amount to achieve the desired hydrogen to carbon molar ratio and to generate a combined synthesis gas and subjecting at least part of the combined synthesis gas to a conversion process effective to produce the useful product. The reforming step enables the conventional water gas shift reaction to be dispensed with.

WO 2017/011025 A1 relates to processes for producing high biogenic concentration Fischer-Tropsch liquids derived from the organic fraction of municipal solid wastes (MSW) feedstock that contains a relatively high concentration of biogenic carbon (derived from plants) and a relatively low concentration of non-biogenic carbon (derived from fossil sources) wherein the biogenic content of the Fischer-Tropsch liquids is the same as the biogenic content of the feedstock.

Accordingly, there is a need for a system and a method for continuous production of syngas and/or chemical products having a target biogenic carbon content which is defined (i.e., not fluctuating) using two feedstocks having an undefined biogenic carbon content.

### Summary of the Invention

These problems are solved by a system for producing syngas and/or at least one chemical product having a target biogenic carbon content of about 0 % to about 100 %, the system comprising:
- a syngas producing unit comprising a first feeding device, a second feeding device, at least one gasifier and at least one syngas purification unit for providing syngas;
   wherein the at least one gasifier is downstream of and fluidically connected to the first feeding device, the first feeding device for feeding a first feedstock into the at least one gasifier, and downstream of and fluidically connected to the second feeding device, the second feeding device for feeding a second feedstock into the at least one gasifier,
   wherein the at least one syngas purification unit is downstream of and fluidically connected to the at least one gasifier,
   wherein said first feedstock has a first biogenic carbon content which is undefined, wherein said first feedstock is solid;
   wherein said second feedstock has a second biogenic carbon content which is undefined;
- optionally a first further process unit for converting said syngas into a first chemical product wherein said optional first further process unit is downstream of and fluidically connected to the at least one purification unit of the syngas producing unit;
- optionally a second further process unit for converting said optional first chemical product into a second chemical product, wherein said optional second further process unit is downstream of and fluidically connected to said optional first further process unit;
- optionally a third further process unit for converting the optional second chemical product into a third chemical product, wherein said optional third further process unit is downstream of and fluidically connected to said optional second further process unit;
- at least one measuring element for measuring the biogenic carbon content of the syngas, said at least one measuring element preferably fluidically connected to said syngas;
- a control unit for adjusting the feed flow rate of the first feed stream and/or the second feed stream according to a biogenic carbon content of about 0 % to about 100 % of the syngas.

These problems are further solved by a method for producing syngas and/or at least one chemical product having a target biogenic carbon content of about 0 % to about 100 %, the method comprising the steps:
(i) feeding a first feed stream of a first feedstock having a first biogenic carbon content through a first feeding device with a first feed flow rate and a second feed stream of a second feedstock having a second biogenic carbon content through a second feeding device with a second feed flow rate into a gasifier
   wherein the biogenic carbon content of the first feedstock is undefined and the biogenic carbon content of the second feedstock is undefined,
   and thereby forming syngas having a combined biogenic carbon content;
(ii) removing impurities from the syngas formed in step (i) in at least one syngas purification unit and thereby forming a clean syngas;
(iii) optionally converting said syngas into a first chemical product in a first further process unit,
   optionally converting said optional first chemical product in a second further process unit into a second chemical product,
   optionally converting said second chemical product in a third further process unit into a third chemical product,
   wherein the optional first further process unit is downstream of and fluidically connected to the gasifier and
   wherein the optional second further process unit is downstream of and fluidically connected to the optional first further process unit and
   wherein the optional third further process unit is downstream of and fluidically connected to the optional second further process unit;
(iv) measuring the biogenic carbon content of the syngas;
(v) calculating the deviation between said target biogenic carbon content and the at least one biogenic carbon content measured in step (iv);
(vi) adjusting the first feed flow rate of the first feed stream and/or the second feed flow rate of the second feed stream;
(vii) repeating steps (i) to (vi) until said deviation calculated in step (v) is equal or smaller than a tolerance limit of +/- 50 % for a target biogenic carbon content of up to about 75 %, +/- 20 % for a target biogenic carbon content of about 75 % to about 90 %, and +/- 10 % for a target biogenic carbon content of about > 90 %.

The systems and the methods according to the present invention enable the continuous production of syngas and/or chemical products from said syngas having a desired and stable target biogenic carbon content from a first feed stream of a first feedstock having a first biogenic carbon content and a second feed stream of a second feedstock having a second biogenic carbon content wherein the first feedstock has an undefined biogenic carbon content and wherein the second feed stream of the second feedstock has an undefined biogenic carbon content.

"Undefined" means that the biogenic carbon content in the first feedstock and the biogenic carbon content of the second feedstock are not determined before the first feedstock and the second feedstock are fed into the system according to the present invention. Hence, the biogenic carbon content of the first feedstock and the biogenic carbon of the second feedstock are unknown before fed into the system according to the present invention. Preferably, the biogenic carbon content of the first feedstock and the biogenic carbon content of the second feedstock are also fluctuating, i.e., are varying as a function of time. For example, the biogenic carbon content of the first feedstock and the biogenic carbon content of the second feedstock may vary in a timeframe of hours of feeding time or in a timeframe of days of feeding time.

According to the present invention, the biogenic carbon content is measured in the syngas and/or the optional first chemical product and/or the optional second chemical product and/or the optional third chemical product, to avoid the disadvantage of the inhomogeneous distribution of biogenic carbon in solid or mainly solid feedstocks.

Preferably, the biogenic carbon content is measured in a gaseous stream to avoid the disadvantage of the inhomogeneous spatial distribution of biogenic carbon in solid or mainly solid feedstocks and/or solid or mainly solid chemical products.

Preferably, the syngas and/or chemical product having a target biogenic carbon content is directly obtained with the system and by the method according to the present invention and no blending with another batch of syngas and/or the respective chemical product having a biogenic carbon content is required to obtain the syngas and/or the chemical product having the target biogenic carbon content.

Furthermore, the systems and the methods according to the present invention enable the production of syngas by gasification and optionally at least a first chemical product made from said syngas in at least a further process unit, the at least first chemical product having the desired and target biogenic carbon content, from a first stream of a first feedstock having a first biogenic carbon content and a second stream of a second feedstock having a second biogenic content wherein the first feedstock has an undefined biogenic carbon content and the second feedstock has an undefined biogenic carbon content.

### Description of the Figures

Figure 1 shows a system according to a first embodiment of the present invention.
Figure 2 shows a system according to a second embodiment of the present invention.
Figure 3 shows a system according to a third embodiment of the present invention.

### Detailed Description of the Invention

The present invention is further described below with reference to the embodiments and figures, but the present invention is not limited to these embodiments, and any modifications or substitutions within the basic spirit of the present invention are still within the scope of the present invention as claimed.

### Definitions:

In the context of the present description and the accompanying claims, the term "about" preferably means a deviation of the thus described value of ±15%.

In the context of the present invention, the term "combinations thereof" is inclusive of one or more of the recited elements.

In the context of the present invention, the term "mixture thereof" is inclusive of one or more of the recited elements.

The term "biogenic" is defined herein as containing organic carbon of renewable origin like agricultural, plant, animal, fungi, microorganisms, marine, or forestry materials living in a natural environment in equilibrium with the atmosphere.

The term "biogenic carbon" is defined herein as ¹⁴C from a "biogenic" source.

The term "biogenic carbon content" is defined herein based on the definition provided in ASTM 6866-22, chapters 3.3.8 and 21.1 as the fraction of biogenic carbon in a combined stream and/or (first) product stream as a percentage of the total carbon (TC) in said product and is calculated according to formula (1): $% biogenic carbon content \left(mass basis\right) = \left[% TC/100\times \left(% biogenic carbon content\right)/100\right] \times 100$ (1)

A "biogenic carbon content on a mass basis" is defined herein as the amount of biogenic carbon in a combined stream and/or (first) product stream as a percent of the total mass of a combined stream and/or (first) product stream can be calculated from the above defined "biogenic carbon content" according to Eq. 4, chapter 21 in ASTM 6866-22.

"¹⁴C" refers to an isotope of carbon comprising 6 protons and 8 neutrons.

"¹²C" and "¹³C" refer to stable isotopes of carbon comprising 6 protons and 6 neutrons (¹²C) and 6 protons and 7 neutrons (¹³C).

The term "feed flow rate" includes "mass flow rate" for solid feedstocks and "volume flow rate" for liquid and/or gaseous feedstocks, intermediate chemical products, and chemical products.

The term "undefined biogenic carbon content" in respect to a stream such as a feed stream, an intermediate chemical product stream such as a syngas stream obtained by gasification of at least one feedstock and/or a chemical product stream such as a syngas stream having a modified molar ratio H₂ : CO in respect to the syngas obtained from the gasification reaction or for example a stream of methanol is defined herein as a change of the biogenic carbon content over time in such a feed stream. The reason for such a "undefined biogenic carbon content" is that the first feed stream of the first feedstock having a first biogenic carbon content has an undefined biogenic carbon content and the second feed stream of the second feedstock having a second biogenic carbon content has an undefined biogenic carbon content. Hence, the first feedstock and the second feedstock have an inhomogeneous biogenic carbon content.

The "fossil carbon" is defined herein as carbon that contains essentially no ¹⁴C because its age is very much greater than the 5730 years half-life of ¹⁴C.

"Syngas" also known as "synthesis gas" refers to a mixture of predominantly CO and H₂, which in addition may comprise further ingredients such as water, CO₂, and methane, which can be obtained by gasification of one or more feedstocks in a syngas producing unit comprising at least one gasifier. Syngas can have a biogenic carbon content because it comprises CO in which the carbon atom can be a biogenic a carbon atom.

The term "electronically connected to" refers to a connection between two or more units and/or elements and/or devices which allows the flow of an electrical current between said two or more units and/or elements and/or devices. Accordingly, also information such as a measured biogenic carbon content value can be transferred between two units, devices, elements, controllers, etc. which are "electronically connected to [each other]".

The term "fluidically connected to" in respect to two or more units and/or elements and/or devices and/or controllers is defined herein that a fluid can flow from one of such unit to the other such unit and flow through and/or along such an element, device, or controller etc.

The direction of flow of a fluid between two or more units and/or devices is defined by the terms "upstream of" and "downstream of". For example, in case a unit 2 is "downstream of" a unit 1, the fluid flows from unit 1 to unit 2. In case a unit 1 is "upstream of" a unit 2, the fluid also flows from unit 1 to unit 2.

The term "physically connected to" refers to a direct ("physical") connection of two or more units and/or elements and/or devices.

The terms "first feedstock"/"first feed stream", "second feedstock"/"second feed stream", and "third feedstock"/third feed stream" are used synonymously, respectively. A "first feedstock" is inserted into a first feeding device in form of a "first feed stream", a "second feedstock" is inserted into a second feeding device in form of a "second feed stream", and a "third feedstock" is inserted into a third feeding device in form of a "third feed stream".

The term "calorific value" is defined herein as the amount of heat produced because of the complete combustion of a unit volume of a feedstock and is given in kJ/kg. The "calorific value" influences the temperature of the autothermal gasification reaction.

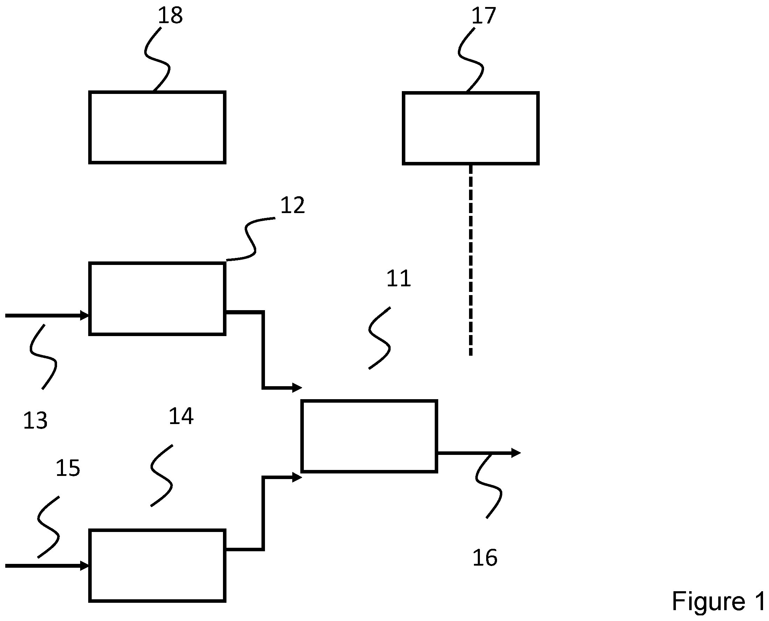

The system according to a first embodiment of the present invention is shown in Figure 1.

A syngas producing unit comprising at least one gasifier (11) receives a first feed stream of a first feedstock (13) having a first biogenic carbon content from a first feeding device (12). The at least one gasifier is downstream of and fluidically connected to the first feeding device (12). The at least one gasifier (11) also receives a second feed stream from a second feedstock (15) having a second biogenic carbon content from a second feeding device (14). The at least one gasifier (11) is downstream of and fluidically connected to the second feeding device (14). The first feedstock and the second feedstock are converted into syngas (16) by a gasification reaction. The syngas stream (16) is leaving the at least one gasifier (11) in downstream direction and impurities are removed in at least one syngas purification unit (not shown in Figure 1) which is downstream of and fluidically connected to the at least one gasifier (11).

The system further comprises at least one measuring element (17) for measuring a biogenic carbon content of the syngas, said at least one measuring element is connected to said syngas preferably, the at least one measuring element is fluidically connected to said syngas. Figure 1 shows an embodiment of the system in which the at least one measuring element (17) is fluidically connected to said syngas stream (16).

The system further comprises optionally a control unit (18) for adjusting the feed flow rate of the first feed stream of the first feedstock and/or the second feed stream of the second feedstock according to a target biogenic carbon content of about 0 % to about 100 % in the syngas and/or the optional first chemical product and/or the optional second chemical product and/or the optional third chemical product.

"According to" is to be understood for all system and method embodiments of the present invention in the sense of "adjusting the feed flow rate of the first feed stream of the first feedstock and/or the feed flow rate of the second feed stream of the second feedstock until a target biogenic carbon content of the syngas and/or the optional first chemical product and/or the optional second chemical product and/or the optional third chemical product of about 0 % to about 100 % is obtained by said adjustment of the feed flow rate(s). This adjustment is repeated in the method according to the present invention ("repeating steps (i) to (vi)") until the deviation between the measured biogenic carbon content and the target biogenic carbon content of the syngas and/or the optional first chemical product and/or the optional second chemical product and/or the optional third chemical product of about 0 % to about 100 % +/- 50 % for a target biogenic carbon content of up to about 75 %, +/- 20 % for a target biogenic carbon content of about 75 % to about 90 %, and +/- 10 % for a target biogenic carbon content of about > 90 %.

The first feed stream and second feed stream are fed into the at least one gasifier and are converted into raw syngas by a gasification reaction. Said raw syngas is then treated in at least one syngas purification unit which is part of the syngas producing unit and leaves the syngas producing unit as a clean syngas (16). The at least one syngas purification unit (not shown in Figure 1) is downstream of and fluidically connected to the at least one gasifier (11). Syngas producing units comprising one or more feeding devices, at least one gasifier and at least one syngas purification unit are also known as "gasification islands".

Suitable gasifiers (11) comprise counter-current fixed bed reactors, co-current-fixed bed reactors, bubbling fluidized bed reactors, circulation fluidized bed reactors, and downdraft or updraft entrained flow reactors. The selection of size and reactor type depends on several parameters, including the composition of the carbonaceous feedstock, demand of products, moisture content and availability of the carbonaceous feedstock. Preferably, the gasifier (11) is an "oxygen blown" gasifier, i.e., oxygen is preferably used as the oxidant in suitable gasifiers (11) listed above.

The gasification reaction in a gasifier is typically carried out at a temperature > 700 °C in the presence of a sub-stoichiometric amount of an oxidant such as oxygen, air, steam, supercritical water, CO₂, or a mixture of the aforementioned. Oxygen is the most common oxidant used for gasification because of its easy availability and low cost. If steam acts as oxidant, the syngas has a higher first molar ratio H₂ : CO than in case if air is used as oxidant. For example, a typical molar ratio "combined air : feedstock" ranges from about 0.3 to < 1.

The conversion of the first feed stream and second feed stream in the gasifier produces a syngas which consists primarily of H₂, CO, CO₂, methane, other hydrocarbons, and impurities. Said syngas has a dedicated molar ratio H₂ : CO when leaving the gasifier which ranges from about 0.1 : 1 to about 3 : 1 and depends on the type of solid and/or liquid feedstocks used, the oxidant and other reaction conditions applied such as temperature and/or residence time of the reactants in the gasifier.

In case the system according to the present invention contains two or more gasifiers, the at least two gasifiers are selected from the group comprising counter-current fixed bed reactors, co-current-fixed bed reactors, bubbling fluidized bed reactors, circulation fluidized bed reactors, downdraft entrained flow reactors, and updraft entrained flow reactors and are preferably installed in a serial manner, i.e., gasifier 2 is downstream of and fluidically connected to gasifier 1 wherein gasifier 1 is the first gasifier. The advantage of at least two gasifiers installed in this fashion is a more complete conversion of the feedstocks and intermediate products of the gasification reaction into the desired syngas components H₂ and CO. More preferably, the first gasifier (gasifier 1) and the second gasifier (gasifier 2) are preferably different types of gasifiers. Most preferably, the first gasifier (gasifier 1) is selected from the group consisting of counter-current fixed bed reactors, co-current-fixed bed reactors, bubbling fluidized bed reactors, circulation fluidized bed reactors and the second gasifier (gasifier 2) is a downdraft entrained flow reactor or an updraft entrained flow reactor which enable the most beneficial of the above-described advantages.

In case three gasifiers are connected to each other in this fashion, all three gasifiers are preferably different types of gasifiers. The advantage such an installation, especially when different types of gasifiers are employed, is an even higher yield of the desired syngas components H₂ and CO. Furthermore, in this preferred and more preferred installation, the solid side products such as sludge are preferably free of carbon and can therefore be disposed in e.g., landfills without further treatment.

Impurities in the raw syngas obtained by a gasification reaction are removed from the syngas product stream directly after leaving the at least one gasifier in at least one syngas purification unit.

The optional first further process unit is downstream of and fluidically connected to the syngas purification unit or in cases of more than one syngas purification units fluidically connected to each other in a serial succession with the last syngas purification unit in the serial succession of the more than one syngas purification units.

The use of a clean syngas (16) obtained from the at least one syngas purification unit is preferred because catalysts utilized in successive process steps have an improved lifetime and maintain their activity when using a clean syngas (16) instead of the raw syngas obtained directly from the gasification reaction in the at least one gasifier.

Typical impurities in the raw syngas obtained from the gasification reaction in a gasifier comprise chlorides, sulfur-containing organic compounds such as sulfur dioxide, trace heavy metals (e.g., as respective salts) and particulate residues. Various chemical and/or physical methods for removal of such impurities from said raw syngas such as filtration, scrubbing, hydrotreatment and ab-/adsorption are known and can be chosen and adapted according to the type and respective concentration of the impurities in said raw syngas and the tolerance to such impurities in the successive process steps. Some selected methods for removal of impurities from said raw syngas will be discussed in more detail. One or more of said methods can also be implemented into the at least one syngas purification unit of the syngas producing unit comprising at least one gasifier (11). However, this selection of methods is not limiting the scope of the present invention.

Bulk particulate impurities can be removed from the raw syngas by a cyclone and/or filters, fine particles, and chlorides by wet scrubbing, trace heavy metals, catalytic hydrolysis for converting sulfur-containing organic compounds to H₂S and acid gas removal for extracting sulfur-containing gases such as H₂S. Bulky and fine particles in the syngas may also be removed with a quench in a soot water washing unit.

A gasification reaction usually results in further reaction products such as solid and/or highly viscous carbonaceous residues (e.g., char and/or tar) which can be further treated in separate steps not relevant for the systems and methods according to the present invention.

Feeding devices suitable for the system according to the present invention are for example stationary, fillable, and emptying lock containers or rotary feeding devices comprising blades. Such feeding devices are particularly suitable to feed a solid first feed stream and/or a solid second feed stream into the system. Solid feed streams may be subjected to one or more pre-treatment methods such as size reduction, drying, torrefaction, compaction, and addition of gasifying agents. Such pre-treatment methods may be part of the first feeding device (12) and/or the second feeding device (14).

Feeding devices suitable to feed a liquid first feed stream (13) and/or second feed stream (15) comprise compressors, pumps and the like, optionally further comprising tanks and the tubing required between tanks, compressors and/or pumps and the at least one falsifier. Such devices and their application are known in the art.

Feeding devices suitable to feed a gaseous first feed stream (13) and/or second feed stream (15) comprise compressors, pumps and the like, optionally further comprising tanks and the tubing required between tanks, compressors and/or pumps and the at least one falsifier. Such devices and their application are known in the art.

Optionally, the first feedstock and/or the second feedstock are pre-treated before entering the first feeding device (12) and/or the second feeding device (14).

A suitable pre-treatment method or combination of pre-treatment methods in a pre-treatment unit should provide a sufficiently homogeneous carbon-based feedstock to the gasification reaction and likewise enable the continuous production of syngas by gasification of a feedstock.

A pre-treatment method or a combination of more than one pre-treatment methods in a pre-treatment unit preferably results in a homogenization of the physical and/or chemical properties of the first feedstock and/or the second feedstock and/or the requirement(s) for a specific type of gasifier and/or the requirements for the optional at least one further chemical production unit for producing a chemical compound or mixture of chemical compounds.

The pre-treatment method for the first feedstock and/or the second feedstock is preferably selected from the group comprising drying, comminution, classification, sorting, agglomeration, thermochemical methods, and biological methods.

Suitable drying methods comprise belt drying, fluidized bed drying, drum drying, spray drying, hearth drying, rotary tray drying, and radiation drying.

Suitable comminution methods comprise pressure, impact, shearing, grinding, milling, crushing, and cutting. Pre-treatment units suitable for size reduction by grinding a feedstock comprise rod mills and ball mills, closed circuited with a classifier unit. Milling is preferably performed wet. Accordingly, a grinding pre-treatment is preferably combined with a drying method in a single pre-treatment unit. Pre-treatment units suitable for size reduction by crushing a feedstock comprise jaw-crushers, gyratory crushers, and cone crushers. Crushing is preferably performed dry. Accordingly, a crushing pre-treatment is preferably combined with a drying method prior to crushing in a single pre-treatment unit.

Suitable classification methods comprise screening (e.g., revolving drum screens, surface screens, fixed and movable gratings), winnowing, flotation, and air table classification. Screening systems preferably comprise one or more of bar screens, wedge wire screens, radial sieves, banana screens, multi-deck screens, vibratory screens, fine screens, flip flop screens and wire mesh screens. Screens can be static, or they can incorporate mechanisms to shake or vibrate the screen(s).

Suitable sorting methods comprise manual sorting, pneumatic sorting, sensor-based sorting (e.g., NIR-assisted sorting, inductive-assisted sorting, and X-ray-assisted sorting), and metal separation (e.g., magnetic separation, eddy current separation).

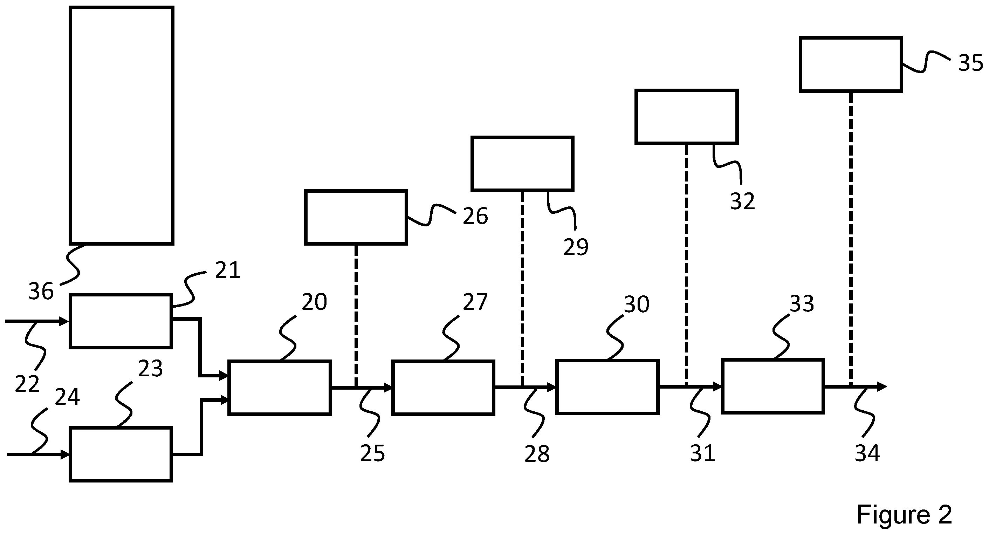

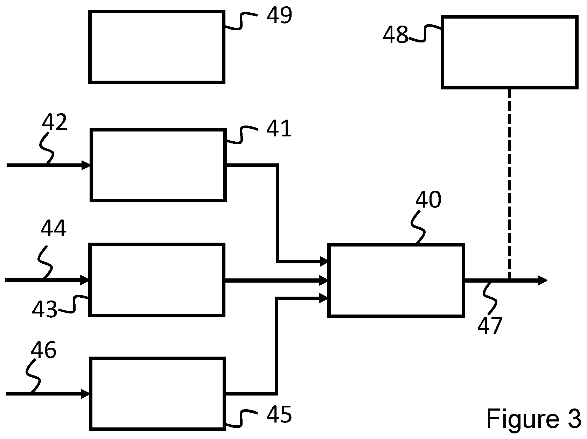

Suitable agglomeration methods comprise pelletizing, briquetting, and extrusion. Such methods usually comprise a means for compressing the feedstock and optionally a further means for heating ("baking") the compressed feedstock. Such pre-treatment methods often provide better physical characteristics than the initial feedstock, improve the transportability of the feedstock to e.g., another location such as from a facility a to a facility b (Figures 2 and 3), and improve the thermochemical behavior.

Suitable thermochemical methods comprise pyrolysis, converting the feedstock into char, and torrefaction. Pre-treatment units suitable for a thermochemical pre-treatment of feedstocks comprise pyrolysis reactors in which the feedstock is heated to e.g., 500 °C in an inert atmosphere to obtain a pyrolysis oil having an improved calorific value compared to the untreated feedstocks.

Suitable biological methods comprise fermentation such as anaerobic fermentation.

The first feeding device (12) and/or the second feeding device (14) preferably comprise(s) at least one means for controlling the flow of the first feed stream and/or the second feed stream which is fluidically connected to the first feed stream (13) in the first feeding device (12) and/or fluidically connected to the second feed stream (15) in the second feeding device (14).

Preferably, the at least one means for controlling the flow of the first feed stream (13) and/or the second feed stream (15) is a flow meter. More preferably, the at least one means for controlling the flow of the first feed stream (13) and/or the second feed stream (15) is a mass flow controller and/or volume flow in case the first feed stream (13) and/or second feed stream (15) are/is predominantly a gas or mixture of gases. The at least one means for controlling the flow of the first feed stream (13) and/or the second feed stream (15) is a solid stream flow meter in case the first feed stream (13) and/or second feed stream (15) are/is predominantly solid or mixture of solids.

Preferably, the system comprises one or more flow controller which is/are fluidically connected to the first feed stream (13) in the first feeding device (12) and/or the second feed stream (15) in the second feeding device (14).

Suitable flow controllers for controlling the flow in case the first feed stream (13) and/or second feed stream (15) are/is predominantly solid, or mixture of solids comprise load cells preferably combined with buffer zones, and use of characteristic curves which are provided for feedstocks having certain fluidic properties (e.g., particle size distribution).

Suitable flow controllers for controlling the flow of gases comprise mass flow controller and/or volume flow controllers. Such a flow controller is a device suitable for measuring and controlling the flow of (liquids and) gases. The flow controller can be analog or digital, preferably the at least one flow controller is a digital flow controller. The flow controllers preferably have an inlet port, an outlet port, a mass flow sensor and/or a volume flow controller, and a proportional control valve. A signal from the control unit or by an operator or by any other suitable means is received through the input port of the flow controller and said signal is compared to the value from the mass flow sensor and/or the volume flow controller and the proportional valve is adjusted accordingly to achieve the desired flow rate of the first feed (13) stream and/or the second feed stream (15). The mass flow controller and/or volume flow controller can be for example a tube with a flap. The position of the flap in respect to the tube diameter relates to a specific flow rate through said tube. The flap can be connected to a mass flow sensor and/or volume flow sensor.

Different measurement methods are available for solid stream flow controllers such as impact plate, measuring of deflection chute and Coriolis technologies. Each method is particularly suitable for certain types of solid streams, e.g., impact plate flow controllers are suitable for granular and/or powdered solid streams. The skilled person knows which type of solid stream flow controller is suitable for which type of solid streams and selects a suitable solid stream flow controller for a given solid stream material. Accordingly, in a preferred embodiment of the present invention, the first feeding device (12) and/or the second feeding device (14) may comprise more than one type of solid stream flow controller to provide a precise flow control for e.g., different kinds of solid hydrocarbon feedstocks. The solid stream flow may also be determined by empirical calibration methods such as level calibration ("Auslitern" in German language).

Preferably, the at least one solid stream flow controllers such as solid hydrocarbon feedstocks (with and without biogenic carbon) measures and weights said solid hydrocarbon feedstocks (first feed stream and/or second feed stream) as they flow through the first feeding device (12) and/or the second feeding device (14), preferably combined with buffer zones.

The at least one measuring element (13) optionally comprises all components required for measuring the biogenic carbon content(s) of the syngas stream (16). Such components include a means for gathering a sample from the respective stream, a means for measuring the amount of sample taken, a means for transferring the sample to a means for measuring the biogenic carbon content of the respective stream and a means to safely dispose said sample.

Optionally, the at least one measuring element (17) is electronically connected to the control unit (18). Said biogenic carbon content(s) measured by the at least one measuring element (17) can be automatically forwarded to the control unit (18) in case the at least one measuring element (17) is electronically connected to the control unit (18) or the biogenic carbon content(s) measured are manually forwarded to the control unit (18) by e.g., an operator.

The biogenic carbon content according to the present invention is preferably determined using a ¹⁴C ("radio-carbon") analysis.

The biogenic carbon content can be for example measured according to ASTM 6866-22 in which two analysis methods for determining the biogenic carbon content in a gaseous stream are disclosed:
i) accelerator mass spectrometry (AMS) along with isotope ratio mass spectrometry (IRMS) (denoted "Method B" in ASTM D6866-22) or
ii) liquid scintillation counters (LSC) using sample carbon that has been converted to benzene (denoted "Method C" in ASTM D6866-22)
wherein the maximum total error for both methods is +/- 3 %.

In both methods disclosed in ASTM 6866-22, the ¹⁴C/¹²C or ¹⁴C/¹³C isotope ratio is determined relative to a carbon-based modern reference material such as NIST Standard Reference Material (SRM) 4990C. The biogenic carbon content can be directly calculated from the measured values obtained by Method B (chapter 9.5) and C (chapter 13.4). Method B is described in detail in chapters 6 to 9 and Method C is described in detail in chapters 10 to 13 of ASTM D6866-22.

The biogenic carbon content can also be determined according to DIN EN 16785-1 by following the guidelines for "Group 1 products" disclosed in this norm and according to CEN/TS 16640. The uncertainty for the measurement method disclosed in DIN EN 16785-1 is +/- 3 % of the measured value for the biogenic-carbon content. The biogenic carbon content is then calculated with formula C.1 in Annex C of DIN EN 16785-1 for the total mass of the sample.

The biogenic carbon content can also be determined using the method and device disclosed in CN 10805163 A: a sample is extracted from the combined stream and/or first product stream and subjected to a ¹⁴C measurement using a ¹⁴C isotope online detector to obtain the ¹⁴C content. Next, the total carbon content (TC) is measured, and the biogenic carbon content is then calculated from the ¹⁴C content and the TC content according to formula (1).

The biogenic carbon content can also be determined using the method and device disclosed in KR 10-2022-0058093 A.

The biogenic carbon content can also be determined using a tripe to double coincidence ratio (TDCR) scintillation counter, optionally automated, as disclosed in WO 2022/172181 A1.

Modifications and adaptions of the methods and devices described above which may be required for use in the system and method according to the present invention and can be made by a skilled person.

Most preferably, the system comprises one measuring element which is fluidically connected to the syngas stream leaving the at least one gasifier and/or the at least one syngas purification unit.

The system according to the present invention comprises a control unit (18) which is preferably electronically and/or physically connected to the first feeding device (12) and/or the second feeding device (14). More preferably, the control unit (18) is electronically and/or physically connected to a flow controller which is fluidically connected to the first feed stream (13) in the first feeding device (12) and/or a flow controller which is fluidically connected to the second feed stream (15) in the second feeding device (14). Most preferably, the control unit (18) is electronically and/or physically connected to a flow controller which is fluidically connected to the second feed stream (15) in the second feeding device (14).

Said control unit (18) is preferably electronically and/or physically connected to the one or more measuring element (17).

The control unit (18) receives the measured biogenic carbon content from the one or more measuring element(s) (17) and compares said measured biogenic carbon content(s) with the target biogenic carbon content of the syngas and/or the optional first chemical product and/or the optional second chemical product and/or the optional third chemical product of about 0 % to about 100 %. The control unit (18) then determines the deviation between said measured biogenic carbon content(s) and said target biogenic carbon content of about 0 % to about 100 %. The deviation between said measured biogenic carbon content(s) and said target biogenic carbon content of about 0 % to about 100 % is then transferred (e.g., manually by an operator or automatically in case the control unit (18) is electronically and/or physically connected to the at least one measuring element (17)) to the first feeding device (12) and/or the second feeding device (14) or optionally to a flow controller fluidically connected to the first feed stream (13) in the first feeding device (12) and/or a flow controller fluidically connected to the second feed stream (15) in the second feeding device (14), and thereby the flow rate of the first feed stream (13) and/or the second feed stream (15) are/is adjusted according to said target biogenic carbon content of about 0 % to about 100 %. Said feed flow rate(s) is/are preferably adjusted with a flow controller which is fluidically connected to the first feed stream (13) in the first feeding device (12) and/or a flow controller which is fluidically connected to the second feed stream (15) in the second feeding device (14).

More preferably, the flow rate of the feed stream among the first feed stream (13) and the second feed stream (15) which contributes a higher biogenic carbon content to the gasification reaction per time is adjusted by a flow controller. Most preferably, the flow rate of the feed stream among the first feed stream (13) and the second feed stream (15) which contributes a higher biogenic carbon content to the gasification reaction per time is adjusted by a flow controller which is fluidically connected to said feed stream having a higher biogenic carbon content.

Preferably, the first feeding device (12) and/or the second feeding device (14) are/is electronically and/or physically connected to the control unit (18).

Preferably, the at least on measuring element (17) is electronically and/or physically connected to the control unit (18).

Preferably, the measured data are automatically transferred from the at least one measuring element (17) to the control unit (18) (which are electronically and/or physically connected to each other) and the calculated deviation is automatically transferred from the control unit (18) to the first feeding device (12) and/or the second feeding device (14) (electronically and/or physically connected to each other).

More preferably, the measured data are automatically transferred from the at least one measuring element (17) to the control unit (18) (which are electronically and/or physically connected to each other) and the calculated deviation is automatically transferred from the control unit (18) to a flow controller fluidically connected to the first feed stream (13) in the first feeding device (12) and/or a flow controller fluidically connected to the second feed stream (15) in the second feeding device (14) (the at least one flow meter electronically and/or physically connected to the control unit (18)).

Most preferably, the measured data are automatically transferred from the at least one measuring element (17) to the control unit (18) (electronically and/or physically connected to each other) and the calculated deviation is automatically transferred from the control unit (18) to a flow controller fluidically connected to the second feed stream (15) in the second feeding device (14) (the flow meter electronically and/or physically connected to the control unit (18)).

Optionally, the at least one measurement element (17) and the control unit (18) are part of a control system. One, two, three, four or more measuring elements can be part of the control system. The control system preferably combines all functionalities and tasks described above for the at least one measuring element (17) and the control unit (18). The control system preferably further comprises at least one control loop and at least one feedback controller such as a programmable logic controller.

The control system compares the measured biogenic carbon content of the syngas stream (16) with the target biogenic carbon content of about 0 % to about 100 % (= the setpoint of the control system), and applies the deviation as a control signal to the first feeding device (12) and/or second feeding device (14), preferably to the a flow controller which is fluidically connected to the first feed stream (13) in the first feeding device (12) and/or to a flow controller which is fluidically connected to the second feed stream (15) in the second feeding device (14) to change the flow rate of the first feed stream (13) and/or the flow rate of the second feed stream (15) and thereby bring the measured biogenic carbon content (= process variable output of the plant) to the target biogenic carbon content of about 0 % to about 100 % (= setpoint of the control system).

Preferably, the flow rate of the feed stream among the first feed stream (13) and the second feed stream (15) which contributes a higher biogenic carbon content to the gasification reaction per time is adjusted by a flow controller. More preferably, the flow rate of the feed stream among the first feed stream (13) and the second feed stream (15) which contributes a higher biogenic carbon content to the gasification reaction per time is adjusted by a flow controller which is fluidically connected to said feed stream having a higher biogenic carbon content.

A rough estimate of the biogenic carbon content of a feedstock can be made by visually inspecting the feedstock prior to feeding the respective feedstock into the gasifier. Thereby a preselection of the respective flow rates of the first stream (13) and the second feed stream (15) can be established. The respective flow rates are then optimized by the method according to the present invention to obtain the target biogenic carbon content of the produced syngas and/or the at least one chemical product. For example, the average biogenic carbon content of household waste is roughly about 50 % was determined by analyzing the biogenic carbon content of CO₂ formed during incineration of household waste.

Preferably, the flow rate of the first feed stream (13) is adjusted by a flow controller which is fluidically connected to the first feed stream (13) in the first feeding device (12) and/or the flow rate of the second feed stream (15) is adjusted by a flow controller which is fluidically connected to the second feed stream (15) in the second feeding device (14). More preferably, the flow rate of the first feed stream (13) in the first feeding device (12) is adjusted by a flow controller which is fluidically connected to the first feed stream (13) or the second feed stream (15) is adjusted by a flow controller which is fluidically connected to the second feed stream (15) in the second feeding device (14).

Next, the biogenic carbon content in the syngas stream (16) and/or the optional first chemical product stream and/or the optional second chemical product stream and/or optional third chemical product stream is measured again and the result compared again with the target biogenic carbon content of about 0 % to about 100 % (= the desired biogenic carbon content and setpoint of the control system) in case the tolerance limit is > +/- 50 % for a target biogenic carbon content of up to about 75 %, +/- 20 % for a target biogenic carbon content of about 75 % to about 90 %, and +/- 10 % for a target biogenic carbon content of about > 90 %. The deviation between the measured biogenic carbon content and target biogenic carbon content of about 0 % to about 100 % (= setpoint of the control system) is calculated again in this case and the flow rate of the first feed stream (13) and/or the second feed stream (15) is again adjusted according to said target biogenic carbon content of about 0 % to about 100 %. This control loop is repeated until said deviation is equal or smaller than a tolerance limit +/- 50 % for a target biogenic carbon content of up to about 75 %, +/- 20 % for a target biogenic carbon content of about 75 % to about 90 %, and +/- 10 % for a target biogenic carbon content of about > 90 %. The "tolerance limit" value is the acceptable deviation in % of the measured biogenic carbon content from the target biogenic carbon content of about 0 % to about 100 % (= setpoint of the control system).

Preferably, the control unit (18) and the at least one measuring element (17) are part of a control system.

Preferably, the control system further comprises at least one control loop and at least one feedback controller.

The first feedstock (13) having a first biogenic carbon content which is undefined and preferably greater than zero.

Preferably, the first feedstock (13) is a solid and/or liquid feedstock and is selected from the group comprising carbonaceous products from crude oil refining extra heavy crude oil, tar sand, bitumen, coke, biomass, waste, mixtures thereof, and mixtures thereof with fossil feedstocks such as coal, oil, and natural gas.

The term "biomass" includes but is not limited to wood, wood pellets, wood chips, straw, lignocellulosic biomass, energy crops, algae, biobased-oils, and biobased-fats (preferably hydrated).

The term "waste" comprises fossil-based waste, biogenic waste, and mixtures thereof. Examples for waste suitable as a feedstock are agricultural/farming residues such as wood processing residues, waste wood, logging residues, switch grass, discarded seed corn, corn stover and other crop residues, municipal solid waste (MSW), textiles, industrial waste, sewage sludge, plastic waste, packaging waste, shredder residues such as car shredder residues and mixtures thereof.

Preferably, the first feedstock (13) is selected from the group comprising biomass, municipal solid waste (MSW), shredder residues such as car shredder residues, textiles, plastic waste, packaging waste, and mixtures thereof.

The first feedstock (13) is inserted as a first feed stream (13) into the first feeding device (12).

The second feedstock (15) having a second biogenic carbon content which is undefined and optionally greater than zero is preferably selected from the group comprising carbonaceous products from crude oil refining extra heavy crude oil, tar sand, bitumen, coke, biomass, waste, mixtures thereof, and mixtures thereof with fossil feedstocks such as coal, oil, and natural gas.

The term "biomass" includes but is not limited to wood, wood pellets, wood chips, straw, lignocellulosic biomass, energy crops, algae, biobased-oils, and biobased-fats (preferably hydrated).

The term "waste" comprises fossil-based waste, biogenic waste, and mixtures thereof. Examples for waste suitable as a feedstock are agricultural/farming residues such as wood processing residues, waste wood, logging residues, switch grass, discarded seed corn, corn stover and other crop residues, municipal solid waste (MSW), textiles, industrial waste, sewage sludge, plastic waste, packaging waste, shredder residues such as car shredder residues and mixtures thereof.

Preferably, the second feedstock (15) is selected from the group comprising biomass, municipal solid waste (MSW), shredder residues such as car shredder residues, textiles, plastic waste, packaging waste, and mixtures thereof.

The second feedstock (15) is inserted as a second feed stream (15) into the second feeding device (14).

A feed stream consisting of hydrocarbon feedstocks having a fossil origin and product streams (e.g., syngas, methane, methanol) obtained from conversion of hydrocarbon feedstocks having a fossil origin are essentially free of ¹⁴C. All ¹⁴C in a product stream is contributed by the biogenic carbon in the first feed stream (13) and/or the biogenic carbon in the second feed stream (15).

The target biogenic carbon content in the syngas (16) and/or further chemical product(s) is obtained with the system and method according to the present invention by varying the flow rate of the first feed stream (13) having an undefined biogenic carbon content and/or the flow rate of the second feed stream (15) having an undefined biogenic carbon content.

In one embodiment of the present invention the target biogenic carbon content in the syngas (16) and/or further chemical product(s) is controlled by adjusting the flow rate of the first stream (13) having an undefined biogenic carbon content or by adjusting the flow rate of the second feed stream (15) having an undefined biogenic carbon content. For example, in case the biogenic carbon content of the first feed stream (13) is decreasing (because of the fluctuation), the flow rate of the second feed stream (15) may be increased until the deviation calculated in step (v) of the method according to the present invention is equal or smaller than a tolerance limit of +/- 50 % for a target biogenic carbon content of up to about 75 %, +/- 20 % for a target biogenic carbon content of about 75 % to about 90 %, and +/- 10 % for a target biogenic carbon content of about > 90 %.

In another embodiment of the present invention, the system comprises in addition at least a first further process unit downstream of and fluidically connected to the at least one gasifier. This embodiment is shown in Figure 2.

The system according to this embodiment of the present invention comprises at least one gasifier (20) which receives a first feed stream (22) of a first feedstock having a first biogenic carbon content from a first feeding device (21). The at least one gasifier (20) is downstream of and fluidically connected to the first feeding device (21). The at least one gasifier (20) also receives a second feed stream (24) from a second feedstock having a second biogenic carbon content from a second feeding device (23). The at least one gasifier (20) is downstream of and fluidically connected to the second feeding device (23). The first feedstock and the second feedstock are converted into syngas (25) by a gasification reaction in the at least one gasifier (20) and impurities are removed from the syngas in at least one syngas purification unit downstream of and fluidically connected to the at least one gasifier. The syngas stream (25) is leaving the at least one syngas purification units in downstream direction as a clean syngas.

The system further comprises at least one measuring element (26) for measuring the biogenic carbon content of the syngas (25), said at least one measuring element (26) is fluidically connected to said syngas (25).

Measurement of the biogenic carbon content with measuring element (26) is preferred because the control hysteresis is minimized in comparison when the biogenic carbon content is measured at a position further downstream of the system according to the present invention (i.e., with measuring element (29) and/or measuring element (32) and/or measuring element (35) instead of measuring element (26)). The time required until the change of flow rate made for the first feed stream (22) and/or the second feed stream (24) resulting in a stable changed biogenic carbon content is minimized in case the biogenic carbon content is measured with a measuring element (26) fluidically connected to the syngas stream (25).

An additional advantage of measuring the biogenic carbon content with a measuring element fluidically connected to the syngas stream (25) leaving the gasifier (20) is a reduced consumption of feedstock, energy and other resources until the target biogenic carbon content is reached by adjusting the flow rate of the first feed stream (22) and/or the second feed stream (24).

A first further process unit (27) is downstream of and fluidically connected to the gasifier (20). The first further process unit (27) can be for example a water-gas shift unit, a CO₂ capture unit, a methanol synthesis unit or a methanation unit or a Fischer-Tropsch unit or a syngas separation unit wherein the composition of the syngas (25) is changed (water-gas shift unit and/or CO₂ capture unit) or the syngas (25) is converted (methanol synthesis unit, methanation unit, Fischer-Tropsch unit) or CO separated from syngas (25) (syngas separation unit). A first chemical product stream (28) is leaving the first further process unit (27) in downstream direction. An optional measuring element (29) is fluidically connected to the first chemical product stream (28).

In case the system according to the present invention further comprises such a first further process unit downstream of and fluidically connected to the gasifier (20), said system comprises at least one measuring element (26) which is fluidically connected to the syngas (25) leaving the gasifier (20).

Said system can also comprise two measuring elements (26;29), a first measuring element (26) fluidically connected to the syngas stream (25) leaving the gasifier (20) and a second measuring element (29) fluidically connected to the first chemical product stream (28) leaving the first further process unit (27).

An example of a system with a first further process unit (27) comprises a water-gas shift unit as first further process unit (27) in which the molar ratio H₂ : CO of the syngas (25) is changed to a syngas (28) having a changed molar ratio H₂ : CO.

Another example of a system with a first further process unit (27) comprises a CO₂ capture unit as first further process unit (27) in which CO₂ is removed from the syngas (25). In this case, also the CO₂ captured / removed has a biogenic carbon content and can be considered a (further) chemical product in the sense of the present invention.

Syngas with a changed molar ratio H₂ : CO (in respect to the syngas produced by the gasification reaction in the at least one gasifier) obtained from a water-gas shift unit and a syngas from which the CO₂ was removed in a CO₂ capture unit and CO₂ are "first chemical products" in the sense of the present invention. Accordingly, the term "first chemical product" comprises syngas with a changed molar ratio H₂ : CO (in respect to the syngas produced in the gasifier), syngas from which the CO₂ was removed, methanol, methane, a mixture of hydrocarbons obtained by Fischer-Tropsch synthesis ("Fischer-Tropsch hydrocarbons"), obtained from syngas and CO separated from syngas.

Optionally, a second further process unit (30) is downstream of and fluidically connected to the optional first further process unit (27). A second chemical product stream (31) is leaving the second further process unit (30) in downstream direction. In case the system according to the present invention further comprises a first further process unit downstream of and fluidically connected to the gasifier (27) and a second further process unit (30) downstream of and fluidically connected to the first further process unit (27), said system comprises at least one measuring element (26) which is fluidically connected to the syngas (25) leaving the gasifier (20).

Said system can also comprise two measuring elements, for example, a first measuring element (26) fluidically connected to the syngas stream (25) leaving the gasifier (20) and a second measuring element (29) fluidically connected to the first chemical product stream (28) or a first measuring element (26) fluidically connected to the syngas stream (25) leaving the gasifier (20) and a second measuring element (32) fluidically connected to the second chemical product stream (31).

Said system can also comprise three measuring elements, a first measuring element (26) fluidically connected to the syngas stream (25) leaving the gasifier (20), a second measuring element (29) fluidically connected to the first chemical product stream (28) and a third measuring element (32) fluidically connected to the second chemical product stream (31).

Preferably, the at least one measuring element (26;29;32) in the system comprising a first further process unit (27) and a second further process unit (30) is measuring element (29) which is fluidically connected to the syngas stream (25).

An example of such a system comprises a water-gas shift unit as the first further process unit (27) from which a first chemical product (28) is obtained (syngas with molar ratio H₂ : CO changed in respect to the syngas leaving the gasifier) and a CO₂ capture unit as the second process unit (30) from which a second chemical product (31) is obtained (first chemical product from which CO₂ is removed).

Optionally, a third further process unit (33) is downstream of and fluidically connected to the optional second further process unit (30). In case the system according to the present invention further comprises a first further process unit (27) downstream of and fluidically connected to the gasifier (20), a second further process unit downstream of and fluidically connected to the first further process unit (27) and a third further process unit (33) downstream of and fluidically connected to the second further process unit, said system comprises at least one measuring element (26) which is fluidically connected to the syngas stream (25) leaving the gasifier (20).

Said system can also comprise two measuring elements, for example, a first measuring element (26) fluidically connected to the syngas stream (25) leaving the gasifier (20) and a second measuring element (29) fluidically connected to the first chemical product stream (28) or a first measuring element (26) fluidically connected to the syngas stream (25) leaving the gasifier (20) and a second measuring element (32) fluidically connected to the second chemical product stream (31) or a first measuring element (26) fluidically connected to the syngas stream (25) leaving the gasifier (27) and a second measuring element (35) fluidically to the third chemical product stream (34) and so on.

Said system can also comprise three measuring elements, e.g., a first measuring element (26) fluidically connected to the syngas stream (25) leaving the gasifier (20), a second measuring element (29) fluidically connected to the first chemical product stream (28) and a third measuring element (32) fluidically connected to the second chemical product stream (31) and so on.

Said system can also comprise four measuring elements, a first measuring element (26) fluidically connected to the syngas stream (25) leaving the gasifier (20), a second measuring element (29) fluidically connected to the first chemical product stream (28), a third measuring element (32) fluidically connected to the second chemical product stream (31) and a fourth measuring element (35) fluidically connected to the third chemical process stream (34).

Preferably, the at least one measuring element (26) in the system comprising a first further process unit (27), a second further process unit (30) and a third further process unit (33) is electronically and/or physically connected to the syngas stream (25) leaving the gasifier (20).

An example of such a system comprises a water-gas shift unit as the first further process unit (27), a CO₂ capture unit as the second further process unit (30) and a methanol synthesis unit as the third further process unit (33) in which syngas (having a modified molar ratio H₂ : CO in respect to the syngas (25) and from which the CO₂ was removed) is converted into methanol as third chemical product. Another example of such a system comprises a water-gas shift unit as the first further process unit, a CO₂ capture unit as the second further process unit and a methanation unit as the third further process unit in which syngas is converted into methane. Another example of such a system comprises a water-gas shift unit as the first further process unit, a CO₂ capture unit as the second further process unit and a Fischer-Tropsch unit as the third further process unit in which syngas is converted into a mixture of hydrocarbons also denoted as Fischer-Tropsch hydrocarbons.

Optionally, the at least one measuring element (26) is fluidically connected to the control unit (36) in case the system comprises a first further process unit (27). Optionally the control unit (36) is electronically and/or physically connected to the first feeding device (21) and/or the second feeding device (23). Optionally, the control unit (36) is electronically and/or physically connected to a flow controller fluidically connected to the first feed stream in the first feeding device (21) and/or to a flow controller fluidically connected to the second feed stream in the second feeding device (23). Preferably, the control unit (36) is electronically and/or physically connected to the at least one measuring element (26) and electronically and/or physically connected to a flow controller fluidically connected to the first feed stream in the first feeding device (21) and/or to a flow controller fluidically connected to the second feed stream in the second feeding device (23). More preferably, the control unit (36) is electronically and/or physically connected to the at least one measuring element (26) and electronically and/or physically connected to a flow controller fluidically connected to the first feed stream in the first feeding device (21) or to a flow controller fluidically connected to the second feed stream in the second feeding device (23). Most preferably, the control unit (36) is electronically and/or physically connected to the measuring element (26) which is fluidically connected to the syngas stream (25), and electronically and/or physically connected to a flow controller fluidically connected to the second feed stream in the second feeding device (23).

More further process units and measuring elements can be added to the system in the way described above.

For example, the optional first further process unit (27) is a water-gas shift process unit and the optional second further process unit (30) is a CO₂ capture process unit.

For example, the optional third further process unit is selected from the group consisting of methanol synthesis unit, methanation process unit and syngas separation unit.

Chemical products having a target biogenic carbon content of about 0 % to about 100 % according to the present invention comprise syngas, CO₂, methane, methanol and downstream products, Fischer-Tropsch hydrocarbons and downstream products, and CO separated from syngas. Accordingly, the system optionally comprises further unit operations downstream of the gasifier to obtain these chemical products. Said optional further unit operations will be discussed below.

The clean syngas (25) having a first molar ratio H₂ : CO is then optionally subjected to a water-gas shift reaction in a water-gas shift unit. Thereby, the H₂ content in the clean syngas (25) is increased by reacting a portion of the CO of the clean syngas with water to form additional H₂ and CO₂ and thereby the second syngas having a second molar ratio H₂ : CO is formed and leaves the water-gas shift unit. The H₂ content in said second syngas leaving the water-gas shift unit and having a second molar ratio H₂ : CO is higher than in said clean syngas leaving the gasifier and having a first molar ratio H₂ : CO.

The water-gas shift reaction will operate with a variety of catalysts (such as copper-zinc-aluminum catalysts and chromium or copper promoted iron-based catalysts) in the temperature range between about 200 °C and about 480 °C.

The water-gas shift unit is downstream of and fluidically connected to the syngas producing unit comprising at least one gasifier.

Optionally, the first molar ratio H₂ : CO of the raw syngas is converted to a raw syngas having a second molar ratio H₂ : CO already inside the at least one gasifier by adapting the reaction conditions inside the at least one gasifier. In such a case, a clean syngas having a second molar ratio H₂ : CO can be produced without an additional water-gas shift unit.

The water-gas shift unit is, optionally, upstream of and fluidically connected to an optional CO₂ capture unit. CO₂ present in the clean syngas having a second molar ratio H₂ : CO is removed from said clean syngas in the CO₂ capture unit and a second syngas comprising a reduced amount of CO₂ is leaving the CO₂ capture unit.

In case the first molar ratio H₂ : CO is converted to a second molar ratio H₂ : CO inside the at least one gasifier, the at least one syngas purification unit is upstream of and fluidically connected to an optional CO₂ capture unit. CO₂ present in the clean syngas having a second molar ratio H₂ : CO is removed from said clean syngas in the CO₂ capture unit and a second syngas comprising a reduced amount of CO₂ is leaving the CO₂ capture unit.

A variety of optional CO₂ capture units and optional methods for CO₂ capture are commercially used and can be selected and adapted by a skilled person to the systems and methods according to the present invention. Suitable methods for CO₂ removal from syngas include membrane separation, absorption, adsorption with e.g., pressure-swing-adsorption (PSA) or MOFs (metal organic frameworks).

Preferably, CO₂ is removed from the syngas by absorption. The syngas is contacted with an aqueous solution of alkylamines such as monoethanolamine, diethanolamine, methyldiethanolamine and the like, and methanol. CO₂ is captured in such solutions/liquids in a chemical reaction and then directed to a "regenerator" (e.g., a stripper with a boiler) where the acid-base reaction is reversed whereby CO₂ and the recycled alkylamine is obtained. This absorption method is also known as "scrubbing". Most preferably, CO₂ in the syngas is removed by absorption using methanol. Also, H₂S is removed from the syngas when using methanol is such an absorption method.

CO₂ is another of the chemical products having a target biogenic carbon content which can be produced with the systems and methods according to the present invention. CO₂ can be for example further converted into methanol or CO.

Methane is another of the chemical products having a target biogenic carbon content which can be produced with the systems and methods according to the present invention. Methane is formed in a methanation (process) unit. The optional methanation unit is downstream of and fluidically connected to the syngas producing unit comprising at least one gasifier.

In another embodiment of the present invention, the methanation unit is downstream of and fluidically connected to a water-gas shift unit. In still another embodiment of the present invention, the methanation unit is downstream of and fluidically connected to a CO₂ capture unit.

The methanation reaction is described by chemical reaction schemes (1) and (2):

CO + 3H₂ → CH₄ + H₂O (1)

CO₂ + 4H₂ → CH₄ + 2H₂O (2)

The methanation reaction and suitable methanation units are for example described in S. Rönsch, J. Schneider, S. Matthischke, M. Schlüter, M. Götz, J. Lefebvre, P. Prabhakaran, S. Bajohr: Review on methanation - From fundamentals to current projects; Fuel 166 (2016) 276-296 and can be selected and adapted by the skilled person.

The methanation reaction is for example a catalytic reaction using nickel on alumina catalysts, preferably a honeycomb shape catalyst, at 1 to 70 bar and 200 to 700 °C, preferably 5 to 60 bar, more preferably 10 to 45 bar and preferably 200 to 550 °C, more preferably 10 to 45 bar.

Methanol is another of the chemical products having a target biogenic carbon content which can be produced with the systems and methods according to the present invention. Methanol is produced from syngas by a catalytic gas phase reaction at about 5 to 10 MPa and a temperature of about 200 °C to about 300 °C using a catalyst in a low-pressure methanol process in e.g., adiabatic reactors or quasi-isothermal reactors. The syngas is provided by the gasifier and/or the water-gas shift unit and/or the optional CO₂ capture unit. The catalyst is for example a mixture of copper and zinc oxides, supported on alumina. The methanol synthesis and various options thereof suitable to be combined with the production system according to the present invention are disclosed in Ullmann's Encyclopedia of Industrial Chemistry (2012), Chapter "Methanol", p. 3 to 12.

Preferably, methanol is further converted to downstream products, e.g., by a methanol-to-olefins (MTO) process to olefins such as ethene and propene or by a methanol to gasoline (MTG) process to fuels, preferably to jet fuel.

In the MTG process, methanol is converted over a catalyst, generally a zeolithe, preferably an acidic zeolithe, like SAPO-34 or HZSM-5 to a mixture of olefins, aliphatics, and aromatics, generally up to C11. Suitable reaction conditions are for example 350-400°C, and atmospheric pressure. The hydrocarbon mixture obtained is suitable as gasoline, especially as jet fuel.

The MTO process is the catalytic conversion of methanol to lower olefins, especially ethene and/or propene. An interruption of the MTG reaction, by careful control over process conditions (T, space velocity), leeds to the methanol-to-olefins process (MTO). As in the MTG process, generally a zeolithe, preferably an acidic zeolithe, like SAPO-34 or HZSM-5 is used as catalyst. Further details regarding the MTG and the MTO process are known in the art and for example described in Makarand R. Gogate (2019) Methanol-to-olefins process technology: current status and future prospects, Petroleum Science and Technology, 37:5, 559-565, DOI: 10.1080/10916466.2018.1555589 and the literature mentioned therein.

Suitable MTG processes comprise the Mobile MTG Process, Topsøe improved gasoline synthesis (TiGAS) and Syngas to Gasoline plus Process (STG+).

The clean syngas can be converted into hydrocarbons such as light synthetic crude oil in an optional Fischer-Tropsch (FT) reaction unit by the FT process. Such hydrocarbons are also denoted "Fischer-Tropsch hydrocarbons". The light synthetic oil can be further converted to downstream products by hydrocracking and/or isomerization to naphtha, light olefins, or diesel fuel or jet fuel, most preferably jet fuel. By said process, so called FT-SPK fuels and FT-SKA fuels are for example obtained. FT-SPK fuels are fuels using biomass resources (e.g. wood residues) and FT-SKA fuels are FT fuels with aromatics using biomass resources (e.g. wood residues). Suitable FT processes and reactors and suitable subsequent processes and reactors for obtaining naphtha, light olefins, gasoline, fuel ("FT fuels") like diesel fuel or jet fuel are known in the art. For production of gasoline and light olefins, the FT process is operated in a temperature range of about 330 °C to about 350 °C and a pressure of about 2.5 MPa (high-temperature FT-process), for production of waxes and/or diesel fuel, in a temperature range of about 220 °C to about 250 °C and a pressure of about 2.5 MPa to about 4.4 MPa (low-temperature FT-process). Suitable reactors for low-temperature FT-processes comprise tubular fixed-bed reactors and slurry bed reactors. Suitable reactors for high-temperature FT-processes comprise circulating fluidized-bed reactors and SAS (Sasol advanced synthol) reactors. Iron- and/or cobalt-based catalysts are used for the FT-process. The Fischer-Tropsch synthesis and various options thereof suitable to be combined with the production system according to the present invention are disclosed in Ullmann's Encyclopedia of Industrial Chemistry (2012), Chapter "Coal Liquefaction", p. 20 to 33 and Greg Perkins et al. Bioresource Technology 312 (2020) 123596 (https://doi.org/10.1016/i.biortech.2020.123596) and the literature mentioned therein.

CO separated from the syngas is another of the chemical products having a target biogenic carbon content which can be produced with the systems and methods according to the present invention. CO can be separated from the syngas in a syngas separation unit which is downstream of and fluidically connected to the syngas producing unit comprising at least one gasifier. CO can be separated from syngas by cryogenic separation methods, commonly referred to as a "cold box" which makes use of the different boiling points of CO and H₂. H₂ can be separated using H₂-selective membranes thorough which H₂ permeates and is thereby separated from a syngas stream.

The system according to the present inventions and all embodiments and variations thereof can be used for a method for producing syngas and/or at least one chemical product having a target biogenic carbon content of about 0 % to about 100 %, the method comprising the steps:
(i) feeding a first feed stream of a first feedstock having a first biogenic carbon content through a first feeding device with a first feed flow rate and a second feed stream of a second feedstock having a second biogenic carbon content through a second feeding device with a second feed flow rate into a gasifier
   wherein the biogenic carbon content of the first feedstock is undefined and the biogenic carbon content of the second feedstock is undefined,
   and thereby forming syngas having a combined biogenic carbon content;
(ii) removing impurities from the syngas formed in step (i) in at least one syngas purification unit and thereby forming a clean syngas;
(iii) optionally converting said syngas into a first chemical product in a first further process unit,
   optionally converting said optional first chemical product in a second further process unit into a second chemical product,
   optionally converting said second chemical product in a third further process unit into a third chemical product,
   wherein the optional first further process unit is downstream of and fluidically connected to the gasifier and
   wherein the optional second further process unit is downstream of and fluidically connected to the optional first further process unit and
   wherein the optional third further process unit is downstream of and fluidically connected to the optional second further process unit;
(iv) measuring the biogenic carbon content of the syngas;
(v) calculating the deviation between said target biogenic carbon content and the at least one biogenic carbon content measured in step (iv);
(vi) adjusting the first feed flow rate of the first feed stream and/or the second feed flow rate of the second feed stream;
(vii) repeating steps (i) to (vi) until said deviation calculated in step (iv) is equal or smaller than a tolerance limit of +/- 50 % for a target biogenic carbon content of up to about 75 %, +/- 20 % for a target biogenic carbon content of about 75 % to about 90 %, and +/- 10 % for a target biogenic carbon content of about > 90 %.

Preferably, the flow rate of the feed stream contributing a higher biogenic carbon content to the gasification reaction per time is adjusted in step (vi). More preferably, the flow rate of the feed stream contributing a higher biogenic carbon content to the gasification reaction per time is adjusted in step (vi) by a flow controller. Most preferably, the flow rate of the feed stream contributing a higher biogenic carbon content to the gasification reaction per time is adjusted in step (vi) by a flow controller which is fluidically connected to said feed stream having a higher biogenic carbon content.

Optionally, said syngas stream is further converted in at least one further optional process unit downstream of and fluidically connected to the at least one syngas purification unit, the process unit selected from the group comprising water-gas shift unit, CO₂ capture unit, methanol synthesis unit, methanation unit and syngas separation unit, and wherein at least one product stream having a product biogenic carbon content is provided by said at least one further process unit.

Preferably, the syngas formed in step (i) is further converted in a first further process unit downstream of and fluidically connected to the gasifier, wherein the first further process unit is a water-gas shift unit. The first chemical product is a syngas having a different molar ratio H₂ : CO than the syngas produced by the gasification reaction. More preferably, the syngas formed in step (i) is converted into a clean syngas in at least one syngas purification unit and then further converted in a first further process unit downstream of and fluidically connected to the gasifier, wherein the first further process unit is a water-gas shift unit.

Preferably, the syngas formed in step (i) is further converted in a first further process unit downstream of and fluidically connected to the gasifier, wherein the first further process unit is a water-gas shift unit, and in a second further process unit downstream of and fluidically connected to the first further process unit, wherein the second further process unit is a CO₂ capture unit. The second chemical product is a syngas having a different molar ratio H₂ : CO than the syngas obtained from the gasifier and from which also the CO₂ is removed.

Preferably, the syngas formed in step (i) is further converted in a first further process unit downstream of and fluidically connected to the gasifier, wherein the first further process unit is a water-gas shift unit, and in a second further process unit downstream of and fluidically connected to the first further process unit, wherein the second further process unit is a CO₂ capture unit, and in a third further process unit downstream of and fluidically connected to the second further process unit, wherein the third further process unit is selected from methanol synthesis unit, methanation unit and syngas separation unit. The second chemical product is a syngas having a different molar ratio H₂ : CO than the syngas obtained from the gasifier and from which also the CO₂ is removed. More preferably, the syngas formed in step (i) is first converted into a clean syngas in at least one syngas purification unit and then further converted in a first further process unit downstream of and fluidically connected to the gasifier, wherein the first further process unit is a water-gas shift unit, and in a second further process unit downstream of and fluidically connected to the first further process unit, wherein the second further process unit is a CO₂ capture unit.

In a preferred embodiment of the present invention, said syngas formed in step (i) and from which impurities are removed in step (ii) is further converted in a first further process unit downstream of and fluidically connected to the at least one syngas purification unit, wherein the first further process unit is a water-gas shift unit, and optionally in a second further process unit downstream of and fluidically connected to the first further process unit, wherein the optional second further process unit is a CO₂ capture unit, and in a third further process unit downstream of and fluidically connected to the optional second further process unit or the first further process unit, wherein the third further process unit is selected from methanol synthesis unit, methanation unit, Fischer-Tropsch unit, and syngas separation unit.

The system according to a third embodiment of the present invention is shown in Figure 3.

The at least one gasifier (40) receives a first feed stream of a first feedstock (43) having a first biogenic carbon content from a first feeding device (41). The at least one gasifier is downstream of and fluidically connected to the first feeding device (41). The at least one gasifier (40) also receives a second feed stream from a second feedstock (44) having a second biogenic carbon content from a second feeding device (43). The at least one gasifier (40) is downstream of and fluidically connected to the second feeding device (43). The at least one gasifier (40) also receives a third feed stream from a third feedstock (46) having a third biogenic carbon content from a third feeding device (45). The at least one gasifier (40) is downstream of and fluidically connected to the third feeding device (45).

The first feedstock, the second feedstock and the third feedstock are converted into raw syngas by a gasification reaction in the at least one gasifier (40). The raw syngas stream is leaving the at least one gasifier (40) in downstream direction and impurities are removed in at least one syngas purification unit (not shown in Figure 3) which is downstream of and fluidically connected to the at least one gasifier (40).

The system further comprises at least one measuring element (48) for measuring a biogenic carbon content of the syngas stream (47), said at least one measuring element (48) is fluidically connected to said syngas stream (47). Figure 3 shows an embodiment of the system in which the at least one measuring element (48) is fluidically connected to said syngas stream (47). The at least one measuring element (48) can measure the biogenic carbon content of the raw syngas stream and/or the biogenic carbon content of the clean syngas stream.

The system further comprises a control unit (49) for adjusting the feed flow rate of the first feed stream of the first feedstock (42) and/or the flow rate of the second feed stream of the second feedstock (44) and/or the flow rate of the third feed stream of the third feedstock (46) according to a target biogenic carbon content of about 0 % to about 100 % in the syngas (47) and/or the optional first chemical product and/or the optional second chemical product and/or the optional third chemical product.

Additional further units, measuring elements and electronic/fluidic connections which were described for the second embodiment of the present invention above can likewise also be used for the third embodiment of the present invention described here.

The first feed stream (42) of the first feedstock has a biogenic carbon content which is undefined. The second feed stream (44) of the second feedstock has a biogenic carbon content which is undefined. The third feed stream (46) of the third feedstock has a biogenic carbon content which is defined and/or has a defined calorific value. The biogenic carbon content and/or the calorific value of the third feed stream (46) of the third feedstock is/are optionally determined prior to feeding the third feed stream (46) into the third feeding device (45). The biogenic carbon content of the third feed stream (46) of the third feedstock can be for example determined using methods discussed for the first embodiment and the second embodiment of the present invention. The calorific value of the third feed stream (46) of the third feedstock is optionally determined prior to feeding the third feed stream into the third feeding device (45). The calorific value of the third feed stream (46) of the third feedstock can be for example determined by combustion of sample of the third feedstock in a bomb calorimeter.

The third feed stream (46) of the third feedstock can be used as an additional means for controlling the biogenic carbon content of the syngas (47) in order to obtain the target biogenic carbon content of the syngas and/or the target biogenic carbon content of the optional first chemical product and/or the target biogenic carbon content of the optional second chemical product and/or the target biogenic carbon content of the optional third chemical product by changing the flow rate of the third feed stream (46) because the third feed stream (46) has a defined biogenic carbon content which can be used to balance the undefined biogenic carbon content of the first feed stream of the first feedstock (42) and the undefined biogenic carbon content of the second feed stream of the second feedstock (44).

The third feed stream (46) can also be used to influence the temperature of the gasification reaction in the at least one gasifier (40) because the third feed stream (46) has a defined calorific value. The gasification reaction depends on the calorific value of the feedstock(s) used for the gasification reaction. The molar ratio H₂ : CO in the raw syngas can be adjusted by influencing the temperature of the gasification reaction. Accordingly, in case the desired molar ratio H₂ : CO in the raw syngas is not obtained by gasification of the first feed stream and the second feed stream, the desired molar ration H₂ : CO can be reached by feeding a third feed stream (46) into the gasifier.

The system and method according to the present invention enable the continuous production of at least one chemical product having a target biogenic carbon content from a first feedstock having a first biogenic carbon content and a second feedstock having a second biogenic carbon content. The first biogenic carbon content in the first feedstock is undefined and the second biogenic carbon content in the second feedstock is undefined but the system and method according to the present invention enable a continuous production of syngas and/or at least one chemical product made from said syngas having a target biogenic content of about 0 % to about 100 %.

The undefined first biogenic carbon content in the first feedstock and the undefined second biogenic carbon content in the second feedstock can be caused by seasonal changes of e.g., biomass and/or changes in composition when using e.g., municipal waste as a feedstock. The undefined first biogenic carbon content of the first feedstock and the undefined second biogenic carbon content of the second feedstock are overcome by the system and method according to the present invention. Hence, syngas and/or at least one chemical product made from said syngas having a target biogenic carbon content of about 0 % to about 100 % can be continuously produced from the first feedstock having a first biogenic carbon content which is undefined and the second feedstock having a second biogenic carbon content which is also undefined.

The invention further relates to a method, preferably according to the method described herein, comprising the step:
- converting the clean syngas, first chemical product, second chemical product and/or the third chemical product obtainable by or obtained by the method as described herein or a chemical material obtainable by or obtained by the method as described herein to obtain a monomer, polymer or polymer product.

The invention further relates to a method comprising the step:
- using the system as described herein to obtain syngas, a monomer, a polymer or a polymer product.

In a preferred embodiment, the monomer is a di- or polyol; preferably butandiol; aldehyde; preferably formaldehyde; di- or polyisocyanate; preferably methylene diphenyl diisocyanate (MDI), polymeric methylene diphenyl diisocyanate (pMDI), toluene diisocyanate (TDI), hexamethylenediisocyanate (HDI) or isophoronediisocyanate (IPDI); amide; preferably caprolactam; alkene; preferably styrene, ethene and norbornene; alkyne, (di)ester; preferably methyl methacrylate; mono or diacid; preferably adipic acid or terephthalic acid; diamine; preferably hexamethylenediamine, nonanediamine; or sulfones; preferably 4,4'-dichlorodiphenyl sulfone.

In a preferred embodiment, the polymer is and/or the polymer product comprises polyamide (PA); preferably PA 6 or PA 66; polyisocyanate polyaddition product; preferably polyurethane (PU), thermoplastic polyurethane (TPU), polyurea or polyisocyanurate (PIR); low-density polyethylene (LDPE), high-density polyethylene (HDPE), polyethylene (PE), polypropylene (PP), polyvinyl chloride (PVC), polyvinyl acetate (PVA), polystyrene (PS), poly acrylonitrile butadiene styrene (ABS), poly styrene acrylonitrile (SAN), poly acrylate styrene acrylonitrile (ASA), polytetrafluoroethylene (PTFE), poly(methyl acrylate) (PMA), poly(methyl methacrylate) (PMMA), polybutadiene (BR, PBD), poly(cis-1,4-isoprene), poly(trans-1,4-isoprene), polyoxymethylene (POM), polyethylene terephthalate (PET), polybutylene terephthalate (PBT), polybutylene adipate co-terephthalate (PBAT), polyester (PES), polyether sulfone (PESU), polyhydroxyalkanoate (PHA), poly-3-hydroxybutyrate (P3HB), poly-4-hydroxybutyrate (P4HB), polyhydroxyvalerate (PHV), polyhydroxyhexanoate (PHH), polyhydroxyoctanoate (PHO), polylactic acid (PLA), polysulfone (PSU), polyphenylene sulfone (PPSU), polycarbonate (PC), polyether ether ketone (PEEK), poly(p-phenylene oxide) (PPO), poly(p-phenylene ether) (PPE); or copolymer or mixture thereof.

In a preferred embodiment, the polymer and/or the polymer product is/are or is/are a part of:
- a part of a car; preferably cylinder head cover, engine cover, housing for charge air cooler, charge air cooler flap, intake pipe, intake manifold, connector, gear wheel, fan wheel, cooling water box, housing, housing part for heat exchanger, coolant cooler, charge air cooler, thermostat, water pump, radiator, fastening part, part of battery system for electromobility, dashboard, steering column switch, seat, headrest, center console, transmission component, door module, A, B, C or D pillar cover, spoiler, door handle, exterior mirror, windscreen wiper, windscreen wiper protection housing, decorative grill, cover strip, roof rail, window frame, sunroof frame, antenna panel, headlight and taillight, engine cover, cylinder head cover, intake manifold, airbag, cushion, or coating;
- a cloth; preferably shirt, trousers, pullover, boot, shoe, shoe sole, tight or jacket;
- an electrical part; preferably electrical or electronic passive or active component, circuit board, printed circuit board, housing component, foil, line, switch, plug, socket, distributor, relay, resistor, capacitor, inductor, bobbin, lamp, diode, LED, transistor, connector, regulator, integrated circuit (IC), processor, controller, memory, sensor, microswitch, microbutton, semiconductor, reflector housing for light-emitting diodes (LED), fastener for electrical or electronic component, spacer, bolt, strip, slide-in guide, screw, nut, film hinge, snap hook (snap-in), or spring tongue;
- a consumer, agricultural product or pharmaceutical product; preferably tennis string, climbing rope, bristle, brush, artificial grass, 3D printing filament, grass trimmer, zipper, hook and loop fastener, paper machine clothing, extrusion coating, fishing line, fishing net, offshore line and rope, vial, syringe, ampoule, bottle, sliding element, spindle nut, chain conveyor, plain bearing, roller, wheel, gear, roller, ring gear, screw and spring dampers, hose, pipeline, cable sheathing, socket, switch, cable tie, fan wheel, carpet, box or bottle for cosmetics, mattress, cushion, insulation, detergent, dishwasher tabs or powder, shampoo, body wash, shower gel, soap, fertilizer, fungicide, or pesticide;
- a packaging for the food industry; preferably mono- or multi-layer blown film, cast film (mono- or multi-layer), biaxially stretched film, or laminating film; or
- a part of a construction; preferably a rotor blade, insulating material, frame, housing, wall, coating, or separating wall.

In a preferred embodiment, the content of the first feedstock and/or the second feedstock in the syngas, monomer, polymer or polymer product is 1 weight-% or more, preferably 2 weight-% or more, more preferably 5 weight-% or more, more preferably 15 weight-% or more, more preferably 30 weight-% or more, more preferably 40 weight-% or more, more preferably 60 weight-% or more, more preferably 80 weight-% or more, more preferably 90 weight-% or more, more preferably 95 weight-% or more; and/or
the content of the first feedstock and/or the second feedstock in the syngas, monomer, polymer or polymer product is 100 weight-% or less, preferably 95 weight-% or less, more preferably 90 weight-% or less, more preferably 50 weight-% or less, more preferably 25 weight-% or less, more preferably 10 weight-% or less; and
preferably the content is determined based on identity preservation and/or segregation and/or mass balance and/or book and claim chain of custody models, preferably based on mass balance, preferably the International Sustainability and Carbon Certification (ISCC) standard.

The converting step(s) to obtain the monomer, polymer or polymer product may comprise one or more synthesis steps and can be performed by conventional synthesis and technics well known to a person skilled in the art. Independent of the person skilled in the art to assess novelty and inventive step of the independent claim(s), the person skilled in the art to perform the converting step(s) is preferably from the technical field(s) pyrolysis, gasification, remonomerization, depolymerization, synthesis, production of monomers, polymers and polymer compounds, and/or its further processing (e.g. extrusion, injection molding). Examples of the step(s) of the conversion is/are described in "Industrial Organic Chemistry", 3. volume, Wiley-VCH, 1997, ISBN: 978-3-527-28838-0, "Kunststoffhandbuch", 11 volumes in 17 sub-volumes, Carl Hanser Verlag; especially volume 6, "Polyamide", 1. edition, 1966, volume 7, "Polyurethane", 3. edition, 1993, and volume 8, "Polyester", 1. edition 1973; "Industrial Organic Chemistry", 3. volume, Wiley-VCH, 1997, ISBN: 978-3-527-28838-0, "Injection Molding Reference Guide, 4th edition, CreateSpace Independent Publishing Platform, 2011, ISBN: 978-1466407824, EP0989146 (A1), EP1460094 (A1), WO2006034800 (A1), EP1529792 (A1), WO2006042674 (A1), EP0364854 (A2), US5506275 (A), EP0897402 (A1), WO2015082316 (A1), WO2021021855 (A1), WO2021126938 (A1), WO2021021902 (A1), WO2021092311 (A1), WO2008155271 (A1), WO2013139827 (A1).

## Claims

1. System for producing syngas and/or at least one chemical product having a target biogenic carbon content of about 0 % to about 100 %, the system comprising:
- a syngas producing unit comprising a first feeding device, a second feeding device, at least one gasifier and at least one syngas purification unit for providing syngas;
wherein the at least one gasifier is downstream of and fluidically connected to the first feeding device, the first feeding device for feeding a first feedstock into the at least one gasifier, and downstream of and fluidically connected to the second feeding device, the second feeding device for feeding a second feedstock into the at least one gasifier,
wherein the at least one syngas purification unit is downstream of and fluidically connected to the at least one gasifier,
wherein said first feedstock has a first biogenic carbon content which is undefined and wherein said second feedstock has a second biogenic carbon content which is undefined, wherein said first feedstock is solid;
- optionally a first further process unit for converting said syngas into a first chemical product wherein said optional first further process unit is downstream of and fluidically connected to the at least one purification unit of the syngas producing unit;
- optionally a second further process unit for converting said optional first chemical product into a second chemical product, wherein said optional second further process unit is downstream of and fluidically connected to said optional first further process unit;
- optionally a third further process unit for converting the optional second chemical product into a third chemical product, wherein said optional third further process unit is downstream of and fluidically connected to said optional second further process unit;
- at least one measuring element for measuring the biogenic carbon content of the syngas, said at least one measuring element fluidically connected to said syngas;
- a control unit for adjusting the feed flow rate of the first feed stream and/or the second feed stream according to a biogenic carbon content of about 0 % to about 100 % of the syngas.

2. System according to claim 1 wherein the first feeding device and/or the second feeding device are/is electronically connected to the control unit.

3. System according to any of claims 1 and 2 wherein the at least one measuring element is electronically connected to the control unit.

4. System according to any of claims 1 to 3 wherein the system comprises one or more flow controller which is/are fluidically connected to the first feed stream in the first feeding device and/or the second feed stream in the second feeding device.

5. System according to claim 4 wherein the one or more flow controllers is/are electronically connected to the control unit.

6. System according to any of claims 1 to 5 wherein the system comprises one measuring element which is fluidically connected to the syngas stream.

7. System according to any of claims 1 to 6, comprising a first further process unit for converting said syngas into a first chemical product wherein said first further process unit is downstream of and fluidically connected to the at least one purification unit of the syngas producing unit, wherein the first further process unit is a water-gas shift process unit.

8. System according to claim 7, comprising a second further process unit for converting said first chemical product into a second chemical product, wherein said second further process unit is downstream of and fluidically connected to said first further process unit, wherein the second further process unit is a CO₂ capture process unit.

9. System according to claim 8, comprising a third further process unit for converting the second chemical product into a third chemical product, wherein said third further process unit is downstream of and fluidically connected to said second further process unit, wherein the third further process unit is selected from the group consisting of methanol synthesis unit, methanation process unit, Fischer-Tropsch unit, and syngas separation unit.

10. System according to any one of claims 1 to 9 wherein the control unit and the at least one measuring element are part of a control system.

11. System according to claim 10 wherein the control system further comprises at least one control loop and at least one feedback controller.

12. System according to any of claims 1 to 11 wherein syngas producing unit further comprises a third feeding device
wherein the at least one gasifier is downstream of and fluidically connected to the third feeding device, the third feeding device for feeding a third feedstock into the at least one gasifier.

13. Method for producing syngas and/or at least one chemical product having a target biogenic carbon content of about 0 % to about 100 %, the method comprising the steps:
(i) feeding a first feed stream of a first feedstock having a first biogenic carbon content through a first feeding device with a first feed flow rate and a second feed stream of a second feedstock having a second biogenic carbon content through a second feeding device with a second feed flow rate into a gasifier
wherein the biogenic carbon content of the first feedstock is undefined and the biogenic carbon content of the second feedstock is undefined,
and thereby forming syngas having a combined biogenic carbon content;
(ii) removing impurities from the syngas formed in step (i) in at least one syngas purification unit and thereby forming a clean syngas;
(iii) optionally converting said syngas into a first chemical product in a first further process unit,
optionally converting said optional first chemical product in a second further process unit into a second chemical product,
optionally converting said second chemical product in a third further process unit into a third chemical product,
wherein the optional first further process unit is downstream of and fluidically connected to the gasifier and
wherein the optional second further process unit is downstream of and fluidically connected to the optional first further process unit and
wherein the optional third further process unit is downstream of and fluidically connected to the optional second further process unit;
(iv) measuring the biogenic carbon content of the syngas;
(v) calculating the deviation between said target biogenic carbon content and the at least one biogenic carbon content measured in step (iv);
(vi) adjusting the first feed flow rate of the first feed stream and/or the second feed flow rate of the second feed stream;
(vii) repeating steps (i) to (vi) until said deviation calculated in step (v) is equal or smaller than a tolerance limit of +/- 50 % for a target biogenic carbon content of up to about 75 %, +/- 20 % for a target biogenic carbon content of about 75 % to about 90 %, and +/- 10 % for a target biogenic carbon content of about > 90 %.

14. Method according to claim 13 wherein the flow rate of the feed stream contributing a higher biogenic carbon content to the gasification reaction per time is adjusted in step (vi).

15. Method according to any of claims 13 and 14 wherein said clean syngas formed in step (ii) is further converted in a first further process unit downstream of and fluidically connected to the gasifier, wherein the first further process unit is a water-gas shift unit, and optionally in a second further process unit downstream of and fluidically connected to the first further process unit, wherein the optional second further process unit is a CO₂ capture unit, and in a third further process unit downstream of and fluidically connected to the optional second further process unit or the first further process unit, wherein the third further process unit is selected from methanol synthesis unit, methanation unit, Fischer-Tropsch unit, and syngas separation unit.

16. Method according to any of claims 13 to 15 wherein step (i) further comprises:
feeding a third feed stream of a third feedstock having a third biogenic carbon content through a third feeding device with a third feed flow rate wherein third feedstock has a defined biogenic carbon content and/or a defined calorific value.

17. Method according to any one of the claims 13 to 16, comprising the step:
- converting the clean syngas, first chemical product, second chemical product and/or the third chemical product obtainable by or obtained by the method according to any one of claims 13 to 16 or a chemical material obtainable by or obtained by the method according to any one of claims 13 to 16 to obtain a monomer, polymer or polymer product.

18. Method according to any one of claims 13 to 17 or the use according to claim 22,
wherein the monomer is a di- or polyol; preferably butandiol; aldehyde; preferably formaldehyde; di- or polyisocyanate; preferably methylene diphenyl diisocyanate (MDI), polymeric methylene diphenyl diisocyanate (pMDI), toluene diisocyanate (TDI), hexamethylenediisocyanate (HDI) or isophoronediisocyanate (IPDI); amide; preferably caprolactam; alkene; preferably styrene, ethene and norbornene; alkyne, (di)ester; preferably methyl methacrylate; mono or diacid; preferably adipic acid or terephthalic acid; diamine; preferably hexamethylenediamine, nonanediamine; or sulfones; preferably 4,4'-dichlorodiphenyl sulfone.

19. Method according to any one of claims 13 to 18 or the use according to claim 22,
wherein the polymer is and/or the polymer product comprises polyamide (PA); preferably PA 6 or PA 66; polyisocyanate polyaddition product; preferably polyurethane (PU), thermoplastic polyurethane (TPU), polyurea or polyisocyanurate (PIR); low-density polyethylene (LDPE), high-density polyethylene (HDPE), polyethylene (PE), polypropylene (PP), polyvinyl chloride (PVC), polyvinyl acetate (PVA), polystyrene (PS), poly acrylonitrile butadiene styrene (ABS), poly styrene acrylonitrile (SAN), poly acrylate styrene acrylonitrile (ASA), polytetrafluoroethylene (PTFE), poly(methyl acrylate) (PMA), poly(methyl methacrylate) (PMMA), polybutadiene (BR, PBD), poly(cis-1,4-isoprene), poly(trans-1,4-isoprene), polyoxymethylene (POM), polyethylene terephthalate (PET), polybutylene terephthalate (PBT), polybutylene adipate co-terephthalate (PBAT), polyester (PES), polyether sulfone (PESU), polyhydroxyalkanoate (PHA), poly-3-hydroxybutyrate (P3HB), poly-4-hydroxybutyrate (P4HB), polyhydroxyvalerate (PHV), polyhydroxyhexanoate (PHH), polyhydroxyoctanoate (PHO), polylactic acid (PLA), polysulfone (PSU), polyphenylene sulfone (PPSU), polycarbonate (PC), polyether ether ketone (PEEK), poly(p-phenylene oxide) (PPO), poly(p-phenylene ether) (PPE); or copolymer or mixture thereof.

20. Method according to any one of claims 13 to 19 or the use according to claim 22,
wherein the polymer and/or the polymer product is/are or is/are a part of:
- a part of a car; preferably cylinder head cover, engine cover, housing for charge air cooler, charge air cooler flap, intake pipe, intake manifold, connector, gear wheel, fan wheel, cooling water box, housing, housing part for heat exchanger, coolant cooler, charge air cooler, thermostat, water pump, radiator, fastening part, part of battery system for electromobility, dashboard, steering column switch, seat, headrest, center console, transmission component, door module, A, B, C or D pillar cover, spoiler, door handle, exterior mirror, windscreen wiper, windscreen wiper protection housing, decorative grill, cover strip, roof rail, window frame, sunroof frame, antenna panel, headlight and taillight, engine cover, cylinder head cover, intake manifold, airbag, cushion, or coating;
- a cloth; preferably shirt, trousers, pullover, boot, shoe, shoe sole, tight or jacket;
- an electrical part; preferably electrical or electronic passive or active component, circuit board, printed circuit board, housing component, foil, line, switch, plug, socket, distributor, relay, resistor, capacitor, inductor, bobbin, lamp, diode, LED, transistor, connector, regulator, integrated circuit (IC), processor, controller, memory, sensor, microswitch, microbutton, semiconductor, reflector housing for light-emitting diodes (LED), fastener for electrical or electronic component, spacer, bolt, strip, slide-in guide, screw, nut, film hinge, snap hook (snap-in), or spring tongue;
- a consumer, agricultural product or pharmaceutical product; preferably tennis string, climbing rope, bristle, brush, artificial grass, 3D printing filament, grass trimmer, zipper, hook and loop fastener, paper machine clothing, extrusion coating, fishing line, fishing net, offshore line and rope, vial, syringe, ampoule, bottle, sliding element, spindle nut, chain conveyor, plain bearing, roller, wheel, gear, roller, ring gear, screw and spring dampers, hose, pipeline, cable sheathing, socket, switch, cable tie, fan wheel, carpet, box or bottle for cosmetics, mattress, cushion, insulation, detergent, dishwasher tabs or powder, shampoo, body wash, shower gel, soap, fertilizer, fungicide, or pesticide;
- a packaging for the food industry; preferably mono- or multi-layer blown film, cast film (mono- or multi-layer), biaxially stretched film, or laminating film; or
- a part of a construction; preferably a rotor blade, insulating material, frame, housing, wall, coating, or separating wall.

21. Method according to any one of claims 13 to 20 or the use according to claim 22,
wherein the content of the first feedstock and/or the second feedstock in the monomer, polymer or polymer product is 1 weight-% or more, preferably 2 weight-% or more, more preferably 5 weight-% or more, more preferably 15 weight-% or more, more preferably 30 weight-% or more, more preferably 40 weight-% or more, more preferably 60 weight-% or more, more preferably 80 weight-% or more, more preferably 90 weight-% or more, more preferably 95 weight-% or more; and/or
wherein the content of the first feedstock and/or the second feedstock in the monomer, polymer or polymer product is 100 weight-% or less, preferably 95 weight-% or less, more preferably 90 weight-% or less, more preferably 50 weight-% or less, more preferably 25 weight-% or less, more preferably 10 weight-% or less; and
preferably wherein the content is determined based on identity preservation and/or segregation and/or mass balance and/or book and claim chain of custody models, preferably based on mass balance, preferably the International Sustainability and Carbon Certification (ISCC) standard.

22. Use of the system according to any one of claims 1 to 12 to obtain syngas, a monomer, a polymer or a polymer product.

## Patentansprüche

1. System zur Herstellung von Synthesegas und/oder mindestens einem chemischen Produkt mit einem angestrebten biogenen Kohlenstoffgehalt von etwa 0 % bis etwa 100 %, wobei das System umfasst:
- eine Synthesegas-Produktionseinheit, umfassend eine erste Zuführvorrichtung, eine zweite Zuführvorrichtung, mindestens einen Vergaser und mindestens eine Synthesegas-Reinigungseinheit zur Bereitstellung von Synthesegas;
wobei der mindestens eine Vergaser der ersten Zuführvorrichtung nachgelagert und fluidisch mit dieser verbunden ist, wobei die erste Zuführvorrichtung zum Einleiten eines ersten Einsatzstoffs in den mindestens einen Vergaser dient, und der zweiten Zuführvorrichtung nachgelagert und fluidisch mit dieser verbunden ist, wobei die zweite Zuführvorrichtung zum Einleiten eines zweiten Einsatzstoffs in den mindestens einen Vergaser dient,
wobei die mindestens eine Synthesegas-Reinigungseinheit dem mindestens einen Vergaser nachgelagert und fluidisch mit diesem verbunden ist,
wobei der erste Einsatzstoff einen ersten biogenen Kohlenstoffgehalt aufweist, der undefiniert ist, und wobei der zweite Einsatzstoff einen zweiten biogenen Kohlenstoffgehalt aufweist, der undefiniert ist, wobei der erste Einsatzstoff fest ist;
- optional eine erste weitere Prozesseinheit zur Umwandlung des Synthesegases in ein erstes chemisches Produkt, wobei die optionale erste weitere Prozesseinheit der mindestens einen Reinigungseinheit der Synthesegas-Produktionseinheit nachgelagert und fluidisch mit dieser verbunden ist;
- optional eine zweite weitere Prozesseinheit zur Umwandlung des optionalen ersten chemischen Produkts in ein zweites chemisches Produkt, wobei die optionale zweite weitere Prozesseinheit der optionalen ersten weiteren Prozesseinheit nachgelagert und fluidisch mit dieser verbunden ist;
- optional eine dritte weitere Prozesseinheit zur Umwandlung des optionalen zweiten chemischen Produkts in ein drittes chemisches Produkt, wobei die optionale dritte weitere Prozesseinheit der optionalen zweiten weiteren Prozesseinheit nachgelagert und fluidisch mit dieser verbunden ist;
- mindestens ein Messelement zur Messung des biogenen Kohlenstoffgehalts des Synthesegases, wobei das mindestens eine Messelement fluidisch mit dem Synthesegas verbunden ist;
- eine Steuereinheit zur Anpassung der Zuführdurchflussrate des ersten Zuführstroms und/oder des zweiten Zuführstroms entsprechend einem biogenen Kohlenstoffgehalt von etwa 0 % bis etwa 100 % des Synthesegases.

2. System nach Anspruch 1, wobei die erste Zuführvorrichtung und/oder die zweite Zuführvorrichtung elektronisch mit der Steuereinheit verbunden ist/sind.

3. System nach einem der Ansprüche 1 und 2, wobei das mindestens eine Messelement elektronisch mit der Steuereinheit verbunden ist.

4. System nach einem der Ansprüche 1 bis 3, wobei das System einen oder mehrere Durchflussregler umfasst, der/die fluidisch mit dem ersten Zuführstrom in der ersten Zuführvorrichtung und/oder dem zweiten Zuführstrom in der zweiten Zuführvorrichtung verbunden ist/sind.

5. System nach Anspruch 4, wobei der eine oder die mehreren Durchflussregler elektronisch mit der Steuereinheit verbunden ist/sind.

6. System nach einem der Ansprüche 1 bis 5, wobei das System ein Messelement umfasst, das fluidisch mit dem Synthesegasstrom verbunden ist.

7. System nach einem der Ansprüche 1 bis 6, umfassend eine erste weitere Prozesseinheit zur Umwandlung des Synthesegases in ein erstes chemisches Produkt, wobei die erste weitere Prozesseinheit der mindestens einen Reinigungseinheit der Synthesegas-Produktionseinheit nachgelagert und fluidisch mit dieser verbunden ist, wobei die erste weitere Prozesseinheit eine Wassergas-Shift-Prozesseinheit ist.

8. System nach Anspruch 7, umfassend eine zweite weitere Prozesseinheit zur Umwandlung des ersten chemischen Produkts in ein zweites chemisches Produkt, wobei die zweite weitere Prozesseinheit der ersten weiteren Prozesseinheit nachgelagert und fluidisch mit dieser verbunden ist, wobei die zweite weitere Prozesseinheit eine CO₂-Abscheideprozesseinheit ist.

9. System nach Anspruch 8, umfassend eine dritte weitere Prozesseinheit zur Umwandlung des zweiten chemischen Produkts in ein drittes chemisches Produkt, wobei die dritte weitere Prozesseinheit der zweiten weiteren Prozesseinheit nachgelagert und fluidisch mit dieser verbunden ist, wobei die dritte weitere Prozesseinheit ausgewählt ist aus der Gruppe bestehend aus Methanolsyntheseeinheit, Methanisierungsprozesseinheit, Fischer-Tropsch-Einheit und Synthesegas-Trenneinheit.

10. System nach einem der Ansprüche 1 bis 9, wobei die Steuereinheit und das mindestens eine Messelement Teil eines Steuerungssystems sind.

11. System nach Anspruch 10, wobei das Steuerungssystem ferner mindestens einen Regelkreis und mindestens einen Rückkopplungsregler umfasst.

12. System nach einem der Ansprüche 1 bis 11, wobei die Synthesegas-Produktionseinheit ferner eine dritte Zuführvorrichtung umfasst,
wobei der mindestens eine Vergaser der dritten Zuführvorrichtung nachgelagert und fluidisch mit dieser verbunden ist, wobei die dritte Zuführvorrichtung zum Einleiten eines dritten Einsatzstoffs in den mindestens einen Vergaser dient.

13. Verfahren zur Herstellung von Synthesegas und/oder mindestens einem chemischen Produkt mit einem angestrebten biogenen Kohlenstoffgehalt von etwa 0 % bis etwa 100 %, wobei das Verfahren die folgenden Schritte umfasst:
(i) Einleiten eines ersten Zuführstroms eines ersten Einsatzstoffs mit einem ersten biogenen Kohlenstoffgehalt durch eine erste Zuführvorrichtung mit einer ersten Zuführdurchflussrate und eines zweiten Zuführstroms eines zweiten Einsatzstoffs mit einem zweiten biogenen Kohlenstoffgehalt durch eine zweite Zuführvorrichtung mit einer zweiten Zuführdurchflussrate in einen Vergaser,
wobei der biogene Kohlenstoffgehalt des ersten Einsatzstoffs undefiniert ist und der biogene Kohlenstoffgehalt des zweiten Einsatzstoffs undefiniert ist,
und dadurch Bildung von Synthesegas mit einem kombinierten biogenen Kohlenstoffgehalt;
(ii) Entfernen von Verunreinigungen aus dem in Schritt (i) gebildeten Synthesegas in mindestens einer Synthesegas-Reinigungseinheit und dadurch Bildung eines gereinigten Synthesegases;
(iii) optionales Umwandeln des Synthesegases in ein erstes chemisches Produkt in einer ersten weiteren Prozesseinheit,
optionales Umwandeln des optionalen ersten chemischen Produkts in einer zweiten weiteren Prozesseinheit in ein zweites chemisches Produkt,
optionales Umwandeln des zweiten chemischen Produkts in einer dritten weiteren Prozesseinheit in ein drittes chemisches Produkt,
wobei die optionale erste weitere Prozesseinheit dem Vergaser nachgelagert und fluidisch mit diesem verbunden ist und
wobei die optionale zweite weitere Prozesseinheit der optionalen ersten weiteren Prozesseinheit nachgelagert und fluidisch mit dieser verbunden ist und
wobei die optionale dritte weitere Prozesseinheit der optionalen zweiten weiteren Prozesseinheit nachgelagert und fluidisch mit dieser verbunden ist;
(iv) Messen des biogenen Kohlenstoffgehalts des Synthesegases;
(v) Berechnen der Abweichung zwischen dem angestrebten biogenen Kohlenstoffgehalt und dem mindestens einen in Schritt (iv) gemessenen biogenen Kohlenstoffgehalt;
(vi) Anpassen der ersten Zuführdurchflussrate des ersten Zuführstroms und/oder der zweiten Zuführdurchflussrate des zweiten Zuführstroms;
(vii) Wiederholen der Schritte (i) bis (vi), bis die in Schritt (v) berechnete Abweichung gleich oder kleiner als eine Toleranzgrenze von +/- 50 % für einen angestrebten biogenen Kohlenstoffgehalt von bis zu etwa 75 %, +/- 20 % für einen angestrebten biogenen Kohlenstoffgehalt von etwa 75 % bis etwa 90 % und +/- 10 % für einen angestrebten biogenen Kohlenstoffgehalt von etwa > 90 % ist.

14. Verfahren nach Anspruch 13, wobei die Durchflussrate des Zuführstroms, der pro Zeiteinheit einen höheren biogenen Kohlenstoffgehalt zur Vergasungsreaktion beiträgt, in Schritt (vi) angepasst wird.

15. Verfahren nach einem der Ansprüche 13 und 14, wobei das in Schritt (ii) gebildete gereinigte Synthesegas in einer ersten weiteren Prozesseinheit, die dem Vergaser nachgelagert und fluidisch mit diesem verbunden ist, weiter umgewandelt wird, wobei die erste weitere Prozesseinheit eine Wassergas-Shift-Einheit ist, und optional in einer zweiten weiteren Prozesseinheit, die der ersten weiteren Prozesseinheit nachgelagert und fluidisch mit dieser verbunden ist, wobei die optionale zweite weitere Prozesseinheit eine CO₂-Abscheideeinheit ist, und in einer dritten weiteren Prozesseinheit, die der optionalen zweiten weiteren Prozesseinheit oder der ersten weiteren Prozesseinheit nachgelagert und fluidisch mit dieser verbunden ist, wobei die dritte weitere Prozesseinheit ausgewählt ist aus Methanolsyntheseeinheit, Methanisierungseinheit, Fischer-Tropsch-Einheit und Synthesegas-Trenneinheit.

16. Verfahren nach einem der Ansprüche 13 bis 15, wobei Schritt (i) ferner umfasst:
Einleiten eines dritten Zuführstroms eines dritten Einsatzstoffs mit einem dritten biogenen Kohlenstoffgehalt durch eine dritte Zuführvorrichtung mit einer dritten Zuführdurchflussrate, wobei der dritte Einsatzstoff einen definierten biogenen Kohlenstoffgehalt und/oder einen definierten Heizwert aufweist.

17. Verfahren nach einem der Ansprüche 13 bis 16, umfassend den Schritt:
Umwandeln des gereinigten Synthesegases, des ersten chemischen Produkts, des zweiten chemischen Produkts und/oder des dritten chemischen Produkts, das durch das Verfahren nach einem der Ansprüche 13 bis 16 erhältlich ist oder erhalten wurde, oder eines chemischen Materials, das durch das Verfahren nach einem der Ansprüche 13 bis 16 erhältlich ist oder erhalten wurde, um ein Monomer, Polymer oder Polymerprodukt zu erhalten.

18. Verfahren nach einem der Ansprüche 13 bis 17 oder die Verwendung nach Anspruch 22,
wobei das Monomer ein Di- oder Polyol ist; vorzugsweise Butandiol; Aldehyd; vorzugsweise Formaldehyd; Di- oder Polyisocyanat; vorzugsweise Methylendiphenyldiisocyanat (MDI), polymeres Methylendiphenyldiisocyanat (pMDI), Toluoldiisocyanat (TDI), Hexamethylendiisocyanat (HDI) oder Isophorondiisocyanat (IPDI); Amid; vorzugsweise Caprolactam; Alken; vorzugsweise Styrol, Ethen und Norbornen; Alkin, (Di)ester; vorzugsweise Methylmethacrylat; Mono- oder Disäure; vorzugsweise Adipinsäure oder Terephthalsäure; Diamin; vorzugsweise Hexamethylendiamin, Nonandiamin; oder Sulfone; vorzugsweise 4,4'-Dichlordiphenylsulfon.

19. Verfahren nach einem der Ansprüche 13 bis 18 oder die Verwendung nach Anspruch 22,
wobei das Polymer ist und/oder das Polymerprodukt umfasst Polyamid (PA); vorzugsweise PA 6 oder PA 66; Polyisocyanat-Polyadditionsprodukt; vorzugsweise Polyurethan (PU), thermoplastisches Polyurethan (TPU), Polyharnstoff oder Polyisocyanurat (PIR); Polyethylen niedriger Dichte (LDPE), Polyethylen hoher Dichte (HDPE), Polyethylen (PE), Polypropylen (PP), Polyvinylchlorid (PVC), Polyvinylacetat (PVA), Polystyrol (PS), Polyacrylnitril-Butadien-Styrol (ABS), Polystyrol-Acrylnitril (SAN), Polyacrylat-Styrol-Acrylnitril (ASA), Polytetrafluorethylen (PTFE), Poly(methylacrylat) (PMA), Poly(methylmethacrylat) (PMMA), Polybutadien (BR, PBD), Poly(cis-1,4-isopren), Poly(trans-1,4-isopren), Polyoxymethylen (POM), Polyethylenterephthalat (PET), Polybutylenterephthalat (PBT), Polybutylen-Adipat-co-Terephthalat (PBAT), Polyester (PES), Polyethersulfon (PESU), Polyhydroxyalkanoat (PHA), Poly-3-hydroxybutyrat (P3HB), Poly-4-hydroxybutyrat (P4HB), Polyhydroxyvalerat (PHV), Polyhydroxyhexanoat (PHH), Polyhydroxyoctanoat (PHO), Polymilchsäure (PLA), Polysulfon (PSU), Polyphenylensulfon (PPSU), Polycarbonat (PC), Polyetheretherketon (PEEK), Poly(p-phenylenoxid) (PPO), Poly(p-phenylenether) (PPE); oder Copolymer oder Mischung davon.

20. Verfahren nach einem der Ansprüche 13 bis 19 oder die Verwendung nach Anspruch 22, wobei das Polymer und/oder das Polymerprodukt ist/sind oder Teil ist/sind von:
- einem Teil eines Kraftfahrzeugs; vorzugsweise Zylinderkopfdeckel, Motorabdeckung, Gehäuse für Ladeluftkühler, Ladeluftkühlerklappen, Ansaugrohr, Ansaugkrümmer, Verbinder, Zahnrad, Lüfterrad, Kühlwasserbehälter, Gehäuse, Gehäuseteil für Wärmetauscher, Kühlmittelkühler, Ladeluftkühler, Thermostat, Wasserpumpe, Kühler, Befestigungsteil, Teil des Batteriesystems für Elektromobilität, Armaturenbrett, Lenksäulenschalter, Sitz, Kopfstütze, Mittelkonsole, Getriebekomponente, Türmodul, A-, B-, C- oder D-Säulenverkleidung, Spoiler, Türgriff, Außenspiegel, Scheibenwischer, Scheibenwischerschutzgehäuse, Ziergrill, Abdeckleiste, Dachträger, Fensterrahmen, Schiebedachrahmen, Antennenpanel, Scheinwerfer und Rückleuchten, Motorabdeckung, Zylinderkopfdeckel, Ansaugkrümmer, Airbag, Polsterung oder Beschichtung;
- einem Textil; vorzugsweise Hemd, Hose, Pullover, Stiefel, Schuh, Schuhsohle, Strumpfhose oder Jacke;
- einem elektrischen Teil; vorzugsweise elektrisches oder elektronisches passives oder aktives Bauteil, Leiterplatte, gedruckte Leiterplatte, Gehäusekomponente, Folie, Leitung, Schalter, Stecker, Buchse, Verteiler, Relais, Widerstand, Kondensator, Induktivität, Spulenkörper, Lampe, Diode, LED, Transistor, Verbinder, Regler, integrierter Schaltkreis (IC), Prozessor, Controller, Speicher, Sensor, Mikroschalter, Mikrotaster, Halbleiter, Reflektorgehäuse für Leuchtdioden (LED), Befestiger für elektrische oder elektronische Bauteile, Abstandshalter, Bolzen, Leiste, Einschubführung, Schraube, Mutter, Filmgelenk, Schnapphaken (Snap-in) oder Federzunge;
- einem Verbraucher-, Agrar- oder Pharmazieprodukt; vorzugsweise Tennissaite, Kletterseil, Borste, Bürste, Kunstgras, 3D-Druckfilament, Rasentrimmer, Reißverschluss, Klettverschluss, Papiermaschinenbespannung, Extrusionsbeschichtung, Angelschnur, Fischernetz, Offshore-Leine und -Seil, Fläschchen, Spritze, Ampulle, Flasche, Gleitelement, Spindelmutter, Kettenförderer, Gleitlager, Rolle, Rad, Zahnrad, Walze, Hohlrad, Schraub- und Federdämpfer, Schlauch, Rohrleitung, Kabelummantelung, Buchse, Schalter, Kabelbinder, Lüfterrad, Teppich, Behälter oder Flasche für Kosmetika, Matratze, Polsterung, Dämmung, Waschmittel, Spülmaschinentabs oder -pulver, Shampoo, Körperwaschmittel, Duschgel, Seife, Düngemittel, Fungizid oder Pestizid;
- einer Verpackung für die Lebensmittelindustrie; vorzugsweise ein- oder mehrschichtige Blasfolie, Gießfolie (ein- oder mehrschichtig), biaxial gestreckte Folie oder Kaschierfolie; oder einem Teil eines Bauwerks; vorzugsweise ein Rotorblatt, Dämmmaterial, Rahmen, Gehäuse, Wand, Beschichtung oder Trennwand.

21. Verfahren nach einem der Ansprüche 13 bis 20 oder die Verwendung nach Anspruch 22,
wobei der Gehalt des ersten Einsatzstoffs und/oder des zweiten Einsatzstoffs im Monomer, Polymer oder Polymerprodukt 1 Gew.-% oder mehr beträgt, vorzugsweise 2 Gew.-% oder mehr, bevorzugter 5 Gew.-% oder mehr, bevorzugter 15 Gew.-% oder mehr, bevorzugter 30 Gew.-% oder mehr, bevorzugter 40 Gew.-% oder mehr, bevorzugter 60 Gew.-% oder mehr, bevorzugter 80 Gew.- % oder mehr, bevorzugter 90 Gew.-% oder mehr, bevorzugter 95 Gew.-% oder mehr; und/oder
wobei der Gehalt des ersten Einsatzstoffs und/oder des zweiten Einsatzstoffs im Monomer, Polymer oder Polymerprodukt 100 Gew.-% oder weniger beträgt, vorzugsweise 95 Gew.-% oder weniger, bevorzugter 90 Gew.-% oder weniger, bevorzugter 50 Gew.-% oder weniger, bevorzugter 25 Gew.-% oder weniger, bevorzugter 10 Gew.-% oder weniger; und
vorzugsweise wobei der Gehalt auf der Grundlage von Identitätserhaltung und/oder Segregation und/oder Massenbilanz und/oder Book-and-Claim-Chain-of-Custody-Modellen bestimmt wird, vorzugsweise auf der Grundlage der Massenbilanz, vorzugsweise des International Sustainability and Carbon Certification (ISCC)-Standards.

22. Verwendung des Systems nach einem der Ansprüche 1 bis 12 zur Gewinnung von Synthesegas, einem Monomer, einem Polymer oder einem Polymerprodukt.

## Revendications

1. Système pour produire du gaz de synthèse et/ou au moins un produit chimique ayant une teneur en carbone biogénique cible d'environ 0 % à environ 100 %, le système comprenant :
- une unité de production de gaz de synthèse comprenant un premier dispositif d'alimentation, un deuxième dispositif d'alimentation, au moins un gazéifieur et au moins une unité de purification de gaz de synthèse pour fournir du gaz de synthèse ;
dans lequel le au moins un gazéifieur est en aval de et raccordé fluidiquement au premier dispositif d'alimentation, le premier dispositif d'alimentation servant à introduire une première charge dans le au moins un gazéifieur, et en aval de et raccordé fluidiquement au deuxième dispositif d'alimentation, le deuxième dispositif d'alimentation servant à introduire une deuxième charge dans le au moins un gazéifieur,
dans lequel la au moins une unité de purification de gaz de synthèse est en aval de et raccordée fluidiquement au au moins un gazéifieur,
dans lequel ladite première charge présente une première teneur en carbone biogénique qui est indéfinie et dans lequel ladite deuxième charge présente une deuxième teneur en carbone biogénique qui est indéfinie, dans lequel ladite première charge est solide ;
- éventuellement une première unité de traitement supplémentaire pour convertir ledit gaz de synthèse en un premier produit chimique, dans lequel ladite première unité de traitement supplémentaire optionnelle est en aval de et raccordée fluidiquement à la au moins une unité de purification de l'unité de production de gaz de synthèse ;
- éventuellement une deuxième unité de traitement supplémentaire pour convertir ledit premier produit chimique optionnel en un deuxième produit chimique, dans lequel ladite deuxième unité de traitement supplémentaire optionnelle est en aval de et raccordée fluidiquement à ladite première unité de traitement supplémentaire optionnelle ;
- éventuellement une troisième unité de traitement supplémentaire pour convertir le deuxième produit chimique optionnel en un troisième produit chimique, dans lequel ladite troisième unité de traitement supplémentaire optionnelle est en aval de et raccordée fluidiquement à ladite deuxième unité de traitement supplémentaire optionnelle ;
- au moins un élément de mesure pour mesurer la teneur en carbone biogénique du gaz de synthèse, ledit au moins un élément de mesure étant raccordé fluidiquement audit gaz de synthèse ;
- une unité de commande pour ajuster le débit d'alimentation du premier flux d'alimentation et/ou du deuxième flux d'alimentation selon une teneur en carbone biogénique d'environ 0 % à environ 100 % du gaz de synthèse.

2. Système selon la revendication 1, dans lequel le premier dispositif d'alimentation et/ou le deuxième dispositif d'alimentation est/sont raccordé(s) électroniquement à l'unité de commande.

3. Système selon l'une quelconque des revendications 1 et 2, dans lequel le au moins un élément de mesure est raccordé électroniquement à l'unité de commande.

4. Système selon l'une quelconque des revendications 1 à 3, dans lequel le système comprend un ou plusieurs régulateurs de débit qui est/sont raccordé(s) fluidiquement au premier flux d'alimentation dans le premier dispositif d'alimentation et/ou au deuxième flux d'alimentation dans le deuxième dispositif d'alimentation.

5. Système selon la revendication 4, dans lequel le ou les régulateurs de débit est/sont raccordé(s) électroniquement à l'unité de commande.

6. Système selon l'une quelconque des revendications 1 à 5, dans lequel le système comprend un élément de mesure qui est raccordé fluidiquement au flux de gaz de synthèse.

7. Système selon l'une quelconque des revendications 1 à 6, comprenant une première unité de traitement supplémentaire pour convertir ledit gaz de synthèse en un premier produit chimique, dans lequel ladite première unité de traitement supplémentaire est en aval de et raccordée fluidiquement à la au moins une unité de purification de l'unité de production de gaz de synthèse, dans lequel la première unité de traitement supplémentaire est une unité de traitement par conversion eau-gaz.

8. Système selon la revendication 7, comprenant une deuxième unité de traitement supplémentaire pour convertir ledit premier produit chimique en un deuxième produit chimique, dans lequel ladite deuxième unité de traitement supplémentaire est en aval de et raccordée fluidiquement à ladite première unité de traitement supplémentaire, dans lequel la deuxième unité de traitement supplémentaire est une unité de traitement de capture de CO₂.

9. Système selon la revendication 8, comprenant une troisième unité de traitement supplémentaire pour convertir le deuxième produit chimique en un troisième produit chimique, dans lequel ladite troisième unité de traitement supplémentaire est en aval de et raccordée fluidiquement à ladite deuxième unité de traitement supplémentaire, dans lequel la troisième unité de traitement supplémentaire est sélectionnée dans le groupe constitué d'une unité de synthèse du méthanol, d'une unité de traitement de méthanation, d'une unité Fischer-Tropsch et d'une unité de séparation de gaz de synthèse.

10. Système selon l'une quelconque des revendications 1 à 9, dans lequel l'unité de commande et le au moins un élément de mesure font partie d'un système de commande.

11. Système selon la revendication 10, dans lequel le système de commande comprend en outre au moins une boucle de commande et au moins un régulateur à rétroaction.

12. Système selon l'une quelconque des revendications 1 à 11, dans lequel l'unité de production de gaz de synthèse comprend en outre un troisième dispositif d'alimentation dans lequel le au moins un gazéifieur est en aval de et raccordé fluidiquement au troisième dispositif d'alimentation, le troisième dispositif d'alimentation servant à introduire une troisième charge dans le au moins un gazéifieur.

13. Procédé pour produire du gaz de synthèse et/ou au moins un produit chimique ayant une teneur en carbone biogénique cible d'environ 0 % à environ 100 %, le procédé comprenant les étapes :
(i) introduction d'un premier flux d'alimentation d'une première charge ayant une première teneur en carbone biogénique à travers un premier dispositif d'alimentation avec un premier débit d'alimentation et d'un deuxième flux d'alimentation d'une deuxième charge ayant une deuxième teneur en carbone biogénique à travers un deuxième dispositif d'alimentation avec un deuxième débit d'alimentation dans un gazéifieur
dans lequel la teneur en carbone biogénique de la première charge est indéfinie et la teneur en carbone biogénique de la deuxième charge est indéfinie,
et formant ainsi du gaz de synthèse ayant une teneur en carbone biogénique combinée ;
(ii) élimination des impuretés du gaz de synthèse formé à l'étape (i) dans au moins une unité de purification de gaz de synthèse et formation ainsi d'un gaz de synthèse purifié ;
(iii) éventuellement conversion dudit gaz de synthèse en un premier produit chimique dans une première unité de traitement supplémentaire,
éventuellement conversion dudit premier produit chimique optionnel dans une deuxième unité de traitement supplémentaire en un deuxième produit chimique,
éventuellement conversion dudit deuxième produit chimique dans une troisième unité de traitement supplémentaire en un troisième produit chimique,
dans lequel la première unité de traitement supplémentaire optionnelle est en aval de et raccordée fluidiquement au gazéifieur et
dans lequel la deuxième unité de traitement supplémentaire optionnelle est en aval de et raccordée fluidiquement à la première unité de traitement supplémentaire optionnelle et
dans lequel la troisième unité de traitement supplémentaire optionnelle est en aval de et raccordée fluidiquement à la deuxième unité de traitement supplémentaire optionnelle ;
(iv) mesure de la teneur en carbone biogénique du gaz de synthèse ;
(v) calcul de l'écart entre ladite teneur en carbone biogénique cible et la au moins une teneur en carbone biogénique mesurée à l'étape (iv) ;
(vi) ajustement du premier débit d'alimentation du premier flux d'alimentation et/ou du deuxième débit d'alimentation du deuxième flux d'alimentation ;
(vii) répétition des étapes (i) à (vi) jusqu'à ce que ledit écart calculé à l'étape (v) soit égal ou inférieur à une limite de tolérance de +/- 50 % pour une teneur en carbone biogénique cible allant jusqu'à environ 75 %, +/- 20 % pour une teneur en carbone biogénique cible d'environ 75 % à environ 90 %, et +/- 10 % pour une teneur en carbone biogénique cible d'environ > 90 %.

14. Procédé selon la revendication 13, dans lequel le débit du flux d'alimentation contribuant une teneur en carbone biogénique plus élevée à la réaction de gazéification par unité de temps est ajusté à l'étape (vi).

15. Procédé selon l'une quelconque des revendications 13 et 14, dans lequel ledit gaz de synthèse purifié formé à l'étape (ii) est en outre converti dans une première unité de traitement supplémentaire en aval de et raccordée fluidiquement au gazéifieur, dans lequel la première unité de traitement supplémentaire est une unité de conversion eau-gaz, et éventuellement dans une deuxième unité de traitement supplémentaire en aval de et raccordée fluidiquement à la première unité de traitement supplémentaire, dans lequel la deuxième unité de traitement supplémentaire optionnelle est une unité de capture de CO₂, et dans une troisième unité de traitement supplémentaire en aval de et raccordée fluidiquement à la deuxième unité de traitement supplémentaire optionnelle ou à la première unité de traitement supplémentaire, dans lequel la troisième unité de traitement supplémentaire est sélectionnée parmi une unité de synthèse du méthanol, une unité de méthanation, une unité Fischer-Tropsch et une unité de séparation de gaz de synthèse.

16. Procédé selon l'une quelconque des revendications 13 à 15, dans lequel l'étape (i) comprend en outre :
l'introduction d'un troisième flux d'alimentation d'une troisième charge ayant une troisième teneur en carbone biogénique à travers un troisième dispositif d'alimentation avec un troisième débit d'alimentation, dans lequel la troisième charge présente une teneur en carbone biogénique définie et/ou une valeur calorifique définie.

17. Procédé selon l'une quelconque des revendications 13 à 16, comprenant l'étape :
conversion du gaz de synthèse purifié, du premier produit chimique, du deuxième produit chimique et/ou du troisième produit chimique pouvant être obtenu par ou obtenu par le procédé selon l'une quelconque des revendications 13 à 16 ou d'un matériau chimique pouvant être obtenu par ou obtenu par le procédé selon l'une quelconque des revendications 13 à 16 pour obtenir un monomère, un polymère ou un produit polymère.

18. Procédé selon l'une quelconque des revendications 13 à 17 ou l'utilisation selon la revendication 22,
dans lequel le monomère est un di- ou polyol ; de préférence le butanediol ; un aldéhyde ; de préférence le formaldéhyde ; un di- ou polyisocyanate ; de préférence le diisocyanate de méthylène diphényle (MDI), le diisocyanate de méthylène diphényle polymérique (pMDI), le diisocyanate de toluène (TDI), le diisocyanate d'hexaméthylène (HDI) ou le diisocyanate d'isophorone (IPDI) ; un amide ; de préférence le caprolactame ; un alcène ; de préférence le styrène, l'éthène et le norbornène ; un alcyne, un (di)ester ; de préférence le méthacrylate de méthyle ; un mono- ou diacide ; de préférence l'acide adipique ou l'acide téréphtalique ; une diamine ; de préférence l'hexaméthylènediamine, la nonanediamine ; ou des sulfones ; de préférence la 4,4'-dichlorodiphényl sulfone.

19. Procédé selon l'une quelconque des revendications 13 à 18 ou l'utilisation selon la revendication 22,
dans lequel le polymère est et/ou le produit polymère comprend du polyamide (PA) ; de préférence PA 6 ou PA 66 ; un produit de polyaddition de polyisocyanate ; de préférence le polyuréthane (PU), le polyuréthane thermoplastique (TPU), la polyurée ou le polyisocyanurate (PIR) ; le polyéthylène basse densité (LDPE), le polyéthylène haute densité (HDPE), le polyéthylène (PE), le polypropylène (PP), le polychlorure de vinyle (PVC), le polyacétate de vinyle (PVA), le polystyrène (PS), l'acrylonitrile butadiène styrène (ABS), le styrène acrylonitrile (SAN), l'acrylate styrène acrylonitrile (ASA), le polytétrafluoroéthylène (PTFE), le poly(acrylate de méthyle) (PMA), le poly(méthacrylate de méthyle) (PMMA), le polybutadiène (BR, PBD), le poly(cis-1,4-isoprène), le poly(trans-1,4-isoprène), le polyoxyméthylène (POM), le polyéthylène téréphtalate (PET), le polybutylène téréphtalate (PBT), le polybutylène adipate co-téréphtalate (PBAT), le polyester (PES), la polyéther sulfone (PESU), le polyhydroxyalcanoate (PHA), le poly-3-hydroxybutyrate (P3HB), le poly-4-hydroxy-butyrate (P4HB), le polyhydroxyvalérate (PHV), le polyhydroxyhexanoate (PHH), le polyhydroxyoctanoate (PHO), l'acide polylactique (PLA), la polysulfone (PSU), la polyphénylène sulfone (PPSU), le polycarbonate (PC), la polyéther éther cétone (PEEK), le poly(p-phénylène oxyde) (PPO), le poly(p-phénylène éther) (PPE) ; ou un copolymère ou un mélange de ceux-ci.

20. Procédé selon l'une quelconque des revendications 13 à 19 ou l'utilisation selon la revendication 22,
dans lequel le polymère et/ou le produit polymère est/sont ou est/sont une partie de :
- une pièce de voiture ; de préférence un couvre-culasse, un couvre-moteur, un boîtier pour refroidisseur d'air de suralimentation, un volet de refroidisseur d'air de suralimentation, un tuyau d'admission, un collecteur d'admission, un connecteur, une roue dentée, une roue de ventilateur, un boîtier de liquide de refroidissement, un boîtier, une pièce de boîtier pour échangeur de chaleur, un refroidisseur de liquide de refroidissement, un refroidisseur d'air de suralimentation, un thermostat, une pompe à eau, un radiateur, une pièce de fixation, une pièce de système de batterie pour l'électromobilité, un tableau de bord, un commutateur de colonne de direction, un siège, un appuie-tête, une console centrale, un composant de transmission, un module de porte, un couvre-montant A, B, C ou D, un spoiler, une poignée de porte, un rétroviseur extérieur, un essuie-glace, un boîtier de protection d'essuie-glace, une grille décorative, une bande de recouvrement, un rail de toit, un cadre de fenêtre, un cadre de toit ouvrant, un panneau d'antenne, un phare avant et arrière, un couvre-moteur, un couvre-culasse, un collecteur d'admission, un airbag, un coussin ou un revêtement ;
- un tissu ; de préférence une chemise, un pantalon, un pull-over, une botte, une chaussure, une semelle de chaussure, un collant ou une veste ;
- une pièce électrique ; de préférence un composant passif ou actif électrique ou électronique, une carte de circuit, une carte de circuit imprimé, un composant de boîtier, un film, une ligne, un commutateur, une fiche, une prise, un distributeur, un relais, une résistance, un condensateur, un inducteur, une bobine, une lampe, une diode, une LED, un transistor, un connecteur, un régulateur, un circuit intégré (CI), un processeur, un contrôleur, une mémoire, un capteur, un microcommutateur, un microbouton, un semi-conducteur, un boîtier réflecteur pour diodes électroluminescentes (LED), un élément de fixation pour composant électrique ou électronique, un entretoise, un boulon, une bande, un guide coulissant, une vis, un écrou, une charnière à film, un crochet d'encliquetage (snap-in) ou une languette à ressort ;
- un produit de consommation, agricole ou pharmaceutique ; de préférence une corde de tennis, une corde d'escalade, une soie, une brosse, du gazon artificiel, un filament d'impression 3D, un coupe-bordures, une fermeture à glissière, un velcro, un vêtement de machine à papier, un revêtement par extrusion, une ligne de pêche, un filet de pêche, une ligne et une corde offshore, un flacon, une seringue, une ampoule, une bouteille, un élément coulissant, un écrou à broche, un convoyeur à chaîne, un palier lisse, un rouleau, une roue, un engrenage, un rouleau, une couronne dentée, des amortisseurs à vis et à ressort, un tuyau flexible, une canalisation, une gaine de câble, une prise, un commutateur, un collier de câble, une roue de ventilateur, un tapis, une boîte ou une bouteille pour cosmétiques, un matelas, un coussin, une isolation, un détergent, des tablettes ou de la poudre pour lave-vaisselle, un shampooing, un gel douche, un gel douche, un savon, un engrais, un fongicide ou un pesticide ;
- un emballage pour l'industrie alimentaire ; de préférence un film soufflé mono- ou multicouche, un film coulé (mono- ou multicouche), un film à orientation biaxiale ou un film de stratification ; ou
une pièce d'une construction ; de préférence une pale de rotor, un matériau isolant, un cadre, un boîtier, une paroi, un revêtement ou une paroi de séparation.

21. Procédé selon l'une quelconque des revendications 13 à 20 ou l'utilisation selon la revendication 22,
dans lequel la teneur de la première charge et/ou de la deuxième charge dans le monomère, le polymère ou le produit polymère est de 1 % en poids ou plus, de préférence 2 % en poids ou plus, plus préférablement 5 % en poids ou plus, plus préférablement 15 % en poids ou plus, plus préférablement 30 % en poids ou plus, plus préférablement 40 % en poids ou plus, plus préférablement 60 % en poids ou plus, plus préférablement 80 % en poids ou plus, plus préférablement 90 % en poids ou plus, plus préférablement 95 % en poids ou plus ; et/ou
dans lequel la teneur de la première charge et/ou de la deuxième charge dans le monomère, le polymère ou le produit polymère est de 100 % en poids ou moins, de préférence 95 % en poids ou moins, plus préférablement 90 % en poids ou moins, plus préférablement 50 % en poids ou moins, plus préférablement 25 % en poids ou moins, plus préférablement 10 % en poids ou moins ; et
de préférence dans lequel la teneur est déterminée sur la base de la préservation de l'identité et/ou de la ségrégation et/ou du bilan massique et/ou de modèles de chaîne de garde book and claim, de préférence sur la base du bilan massique, de préférence la norme de certification internationale de durabilité et de carbone (ISCC).

22. Utilisation du système selon l'une quelconque des revendications 1 à 12 pour obtenir du gaz de synthèse, un monomère, un polymère ou un produit polymère.
